# FASCICULE DE BREVET EUROPEEN

(11) **EP 3 457 621 B1**
(45) Date de publication et mention de la délivrance du brevet: **20.01.2021**
(21) Numéro de dépôt: 18193229.4
(22) Date de dépôt: 07.09.2018
(51) Int. Cl.: H04L 9/00, G06F 21/54

(54) **PROCÉDÉ D'EXÉCUTION D'UN CODE BINAIRE D'UNE FONCTION SÉCURISÉE PAR UN MICROPROCESSEUR**
AUSFÜHRUNGSVERFAHREN EINES BINÄRCODES EINER DURCH EINEN MIKROPROZESSOR GESICHERTEN FUNKTION
METHOD FOR EXECUTING A BINARY CODE OF A SECURE FUNCTION BY A MICROPROCESSOR

(30) Priorité: 14.09.2017 FR 1758509
(43) Date de publication de la demande: 20.03.2019
(73) Titulaire: Commissariat à l'Énergie Atomique et aux Énergies Alternatives, 75015 Paris (FR)
(72) Inventeur: SAVRY, Olivier, 38360 SASSENAGE (FR)
(74) Mandataire: Colombo, Michel

(56) Documents cités:
- EP-A1- 1 783 648
- FR-A1- 2 841 015
- US-A1- 2003 046 563
- US-B2- 7 058 877

## Description

L'invention concerne un procédé d'exécution d'un code binaire d'une fonction sécurisée par un microprocesseur. L'invention concerne également :
- un code binaire d'une fonction sécurisée, un support d'enregistrement d'informations et un microprocesseur pour la mise en œuvre de ce procédé d'exécution, et
- un compilateur pour générer ce code binaire.

Pour obtenir des informations sur un code binaire ou provoquer un fonctionnement inattendu du code binaire, de nombreuses attaques sont possibles. Par exemple, des attaques connues sous le terme d'« injection de fautes » ou « fault attack » en anglais peuvent être mises en œuvre. Ces attaques consistent à perturber le fonctionnement du microprocesseur ou de la mémoire contenant le code binaire, par divers moyens physiques comme des modifications des tensions d'alimentation, des modifications du signal d'horloge, l'exposition du microprocesseur à des ondes électromagnétiques et autres.

À l'aide de telles attaques, un attaquant peut altérer l'intégrité des instructions machines ou des données pour, par exemple, retrouver une clé secrète d'un système cryptographique, contourner des mécanismes de sécurité tels que la vérification d'un code PIN lors d'une authentification ou simplement empêcher l'exécution d'une fonction essentielle pour la sécurité d'un système critique.

Ces attaques peuvent provoquer notamment trois types de fautes, dites fautes d'exécution, lors de l'exécution du code binaire :
1) une altération des instructions du code machine exécuté,
2) une altération des données stockées dans la mémoire principale ou dans des registres du microprocesseur, et
3) une altération du flot de contrôle du code machine.

Le flot de contrôle correspond au chemin d'exécution suivi lors de l'exécution du code machine. Le flot de contrôle est classiquement représenté sous la forme d'un graphe connu sous le terme de graphe de flot de contrôle ou « control flow graph » en anglais.

Le code binaire d'une fonction peut être instrumenté pour permettre la détection et le signalement des fautes d'exécution. Lorsque le code binaire d'une fonction est ainsi instrumenté, ce code binaire est qualifié de « code binaire d'une fonction sécurisée ». En effet, contrairement au code binaire d'une fonction non-sécurisée, ce code binaire est apte à permettre le signalement de fautes d'exécution typiquement rencontrées en cas d'attaques.

De l'état de la technique est connu de :
- US2003/046563A1,
- US7058877B2,
- EP1783648A1,
- FR2841015A1.

En particulier, US25003/046563A1 décrit un code binaire divisé en blocs d'instructions, chacun chiffré avec une clé différente. Dans ce contexte, ce document enseigne que pour éviter que des blocs d'instructions soient intervertis en mémoire, il faut chiffrer chacun de ces blocs avec une clé qui dépend de l'adresse mémoire où est enregistré ce bloc. De plus, ce document enseigne qu'après avoir été déchiffré, l'intégrité du bloc est vérifiée. Pour cela, une somme de contrôle est calculée pour le bloc déchiffré. Les valeurs attendues des sommes de contrôle sont enregistrées dans une section de la mémoire vive différente de celle où sont enregistrés les blocs chiffrés.

L'objectif ici est de proposer un procédé d'exécution d'un code binaire d'une fonction sécurisée qui offre au moins l'une des possibilités suivantes :
- détecter une faute d'exécution si une instruction du code machine de la fonction sécurisée est altérée,
- détecter une faute d'exécution si le flot de contrôle est altéré,
- détecter une faute d'exécution en cas de dysfonctionnement d'une unité arithmétique et logique lors de l'exécution d'une instruction par cette unité,
- détecter une faute d'exécution si les données traitées lors de l'exécution de la fonction sécurisée sont altérées.

L'invention a donc pour objet un tel procédé d'exécution d'un code binaire d'une fonction sécurisée par un microprocesseur conforme à la revendication 1.

Les modes de réalisation de ce procédé d'exécution peuvent comporter une ou plusieurs des caractéristiques des revendications dépendantes.

L'invention a également pour objet un code binaire d'une fonction sécurisée exécutable par un microprocesseur pour la mise en œuvre du procédé revendiqué.

L'invention a également pour objet un support d'enregistrement d'informations lisible par un microprocesseur, ce support d'enregistrement d'informations contenant le code binaire revendiqué.

L'invention a également pour objet un microprocesseur pour la mise en œuvre du procédé revendiqué.

Enfin, l'invention a également pour objet un compilateur apte à transformer automatiquement un code source d'une fonction sécurisée en un code binaire de cette fonction sécurisée, dans lequel le compilateur est apte à transformer automatiquement le code source en un code binaire revendiqué.

L'invention sera mieux comprise à la lecture de la description qui va suivre, donnée uniquement à titre d'exemple non limitatif et faite en se référant aux dessins sur lesquels :
- la figure 1 est une illustration schématique de l'architecture d'un appareil électronique apte à exécuter un code binaire d'une fonction sécurisée ;
- la figure 2 est une illustration schématique de la structure d'une ligne de code codant une instruction du code binaire exécuté par l'appareil de la figure 1,
- les figures 3 à 5 sont des illustrations schématiques de différentes portions du code binaire de la fonction sécurisée susceptible d'être exécutée par l'appareil de la figure 1 ;
- la figure 6 est un organigramme d'un procédé d'exécution du code binaire de la fonction sécurisée ;
- la figure 7 est une illustration schématique de la structure d'un registre du microprocesseur de l'appareil de la figure 1,
- la figure 8 est un organigramme d'un détail d'une étape du procédé de la figure 6 mise en œuvre pour sécuriser le fonctionnement d'une unité arithmétique et logique du microprocesseur de l'appareil de la figure 1,
- la figure 9 est une illustration schématique de la structure d'une ligne de code codant une donnée traitée lors de l'exécution du code binaire par l'appareil de la figure 1,
- la figure 10 est un organigramme d'un détail d'une étape du procédé de la figure 6 mise en œuvre pour sécuriser les données traitées lors de l'exécution du code binaire par l'appareil de la figure 1
- la figure 11 est une illustration schématique d'un compilateur apte à générer le code machine exécuté par l'appareil de la figure 1.

### Chapitre I : Conventions, notations et définitions :

Dans les figures, les mêmes références sont utilisées pour désigner les mêmes éléments. Dans la suite de cette description, les caractéristiques et fonctions bien connues de l'homme du métier ne sont pas décrites en détails.

Dans cette description, les définitions suivantes sont adoptées.

Un « programme » désigne un ensemble d'une ou de plusieurs fonctions prédéterminées que l'on souhaite faire exécuter par un microprocesseur.

Un « code source » est une représentation du programme dans un langage informatique, n'étant pas directement exécutable par un microprocesseur et étant destiné à être transformé par un compilateur en un code machine directement exécutable par le microprocesseur.

Un programme ou un code est dit être « directement exécutable » lorsqu'il est apte à être exécuté par un microprocesseur sans que ce microprocesseur n'ait besoin au préalable de le compiler au moyen d'un compilateur ou de l'interpréter au moyen d'un interpréteur.

Une « instruction » désigne une instruction machine exécutable par un microprocesseur. Une telle instruction est constituée :
- d'un opcode, ou code d'opération, codant la nature de l'opération à exécuter, et
- d'un ou plusieurs opérandes définissant la ou les valeurs des paramètres de cette opération.

Un « code machine » est un ensemble d'instructions machines. Il s'agit typiquement d'un fichier contenant une succession de bits portant la valeur « 0 » ou « 1 », ces bits codant les instructions à exécuter par le microprocesseur. Le code machine est directement exécutable par le microprocesseur, c'est-à-dire sans nécessiter une compilation ou une interprétation préalable.

Un « code binaire » est un fichier contenant une succession de bits portant la valeur « 0 » ou « 1 ». Ces bits codent des données et des instructions à exécuter par le microprocesseur. Ainsi, le code binaire comprend au moins un code machine et en plus, généralement, des données numériques traitées par ce code machine.

Un « flot d'instructions » est une succession d'instructions classées les unes après les autres et qui forme, dans le code machine, une suite ordonnée de bits. Le flot d'instructions débute par une instruction initiale et se termine par une instruction finale. Par rapport à une instruction donnée du flot d'instructions, les instructions situées du côté de l'instruction initiale sont appelées « instructions précédentes » et les instructions situées du côté de l'instruction finale, sont appelées « instructions suivantes ». Dans ce texte, ce flot d'instructions en mémoire est découpé en une succession de blocs de base immédiatement consécutifs ou séparés par des blocs de données.

Dans ce texte, un « bloc de base » est un groupe d'instructions successives du flot d'instructions qui débute à une adresse de branchement et qui se termine par une seule instruction de branchement explicite ou implicite. Une instruction de branchement explicite se caractérise par la présence explicite d'un opcode dans le code machine qui code l'instruction de branchement. Une instruction de branchement implicite correspond au cas où l'exécution d'un bloc de base précédent se poursuit systématiquement par l'exécution d'un bloc de base suivant situé, dans le code machine, immédiatement après le bloc de base précédent. Dans ce cas, étant donné qu'en absence d'instruction de branchement explicite, les instructions du code machine sont exécutées dans l'ordre les unes après les autres, il n'est pas nécessaire d'introduire à la fin du bloc de base précédent une instruction de branchement explicite vers le bloc de base suivant. Dans cette description, on dit que dans ce cas, le bloc de base précédent se termine par une instruction de branchement implicite car elle n'est pas explicitement codée dans le code machine. Dans ce cas, le bloc de base précédent se termine juste avant l'adresse de branchement du bloc de base suivant. Dans cette demande, l'expression « instruction de branchement » désigne une instruction de branchement explicite à défaut de mention contraire. Ainsi, l'exécution d'un bloc de base débute systématiquement par l'exécution de l'instruction située à son adresse de branchement et se termine systématiquement par l'exécution de l'instruction de branchement qui termine ce bloc de base. Un bloc de base ne comporte pas d'autres instructions de branchement que celle située à la fin de ce bloc de base. Ainsi, les instructions d'un bloc de base sont systématiquement toutes lues par le microprocesseur les unes après les autres dans l'ordre où elles sont présentes dans ce bloc de base. L'instruction de branchement peut diriger, lorsqu'elle est exécutée, le flot de contrôle systématiquement vers la même adresse de branchement ou, en alternance, vers différentes adresses de branchement. Ce dernier cas de figure se rencontre, par exemple, lorsqu'à la fin du bloc de base exécuté, le flot de contrôle peut se poursuivre vers un premier et, en alternance, vers un deuxième bloc de base.

Une « instruction de branchement » est une instruction qui, lorsqu'elle est exécutée par le microprocesseur, déclenche un saut vers l'adresse de branchement d'un autre bloc de base. Cette instruction de branchement comporte donc au moins l'adresse de branchement de cet autre bloc de base. Typiquement, à cet effet, cette instruction remplace la valeur actuelle du compteur ordinal par la valeur de l'adresse de branchement. On rappelle que le compteur ordinal contient l'adresse de la prochaine instruction à exécuter par le microprocesseur. En absence d'instruction de branchement, à chaque fois qu'une instruction est exécutée, le compteur ordinal est incrémenté de la taille de l'instruction actuellement exécutée. En absence d'instruction de branchement, les instructions sont systématiquement exécutées séquentiellement les unes après les autres dans l'ordre où elles sont enregistrées dans une mémoire principale. L'instruction de branchement peut être inconditionnelle, c'est à dire que le saut vers l'adresse de branchement est systématiquement réalisé dès que cette instruction est exécutée. Une instruction de branchement inconditionnel est par exemple l'instruction « JMP » en langage assembleur pour les microprocesseurs de la série x86. L'instruction de branchement peut aussi être conditionnelle, c'est-à-dire que le saut vers l'adresse de branchement est déclenché lors de son exécution uniquement si une condition particulière est vérifiée. Par exemple, une instruction de branchement conditionnel est une instruction « JE », « JA » ou « JNE » en assembleur. L'instruction de branchement peut aussi bien être un appel à une fonction. Dans ce texte, le terme « instruction de branchement » désigne aussi bien les instructions de branchement direct qu'indirect. Une instruction de branchement direct est une instruction de branchement qui contient directement la valeur numérique de l'adresse de branchement. Une instruction de branchement indirect, est une instruction de branchement vers une adresse de branchement contenue dans une mémoire ou un registre du microprocesseur. Ainsi, contrairement à une instruction de branchement direct, une instruction de branchement indirect ne contient pas directement la valeur numérique de l'adresse de branchement.

Une « adresse de branchement » est l'adresse dans la mémoire principale à laquelle se trouve la première instruction exécutée d'un bloc de base. Par la suite, on parle d'adresse de branchement même pour les blocs de base dont la première instruction est exécutée suite à l'exécution d'une instruction de branchement implicite.

On parle d'exécution d'une fonction pour désigner l'exécution des instructions réalisant cette fonction.

Dans un souci de simplification, dans cette description et dans les figures, les instructions ne sont pas représentées sous forme binaire, mais plutôt sous une forme symbolique exprimée dans un langage évolué de plus haut niveau.

### Chapitre II : Architecture de l'appareil :

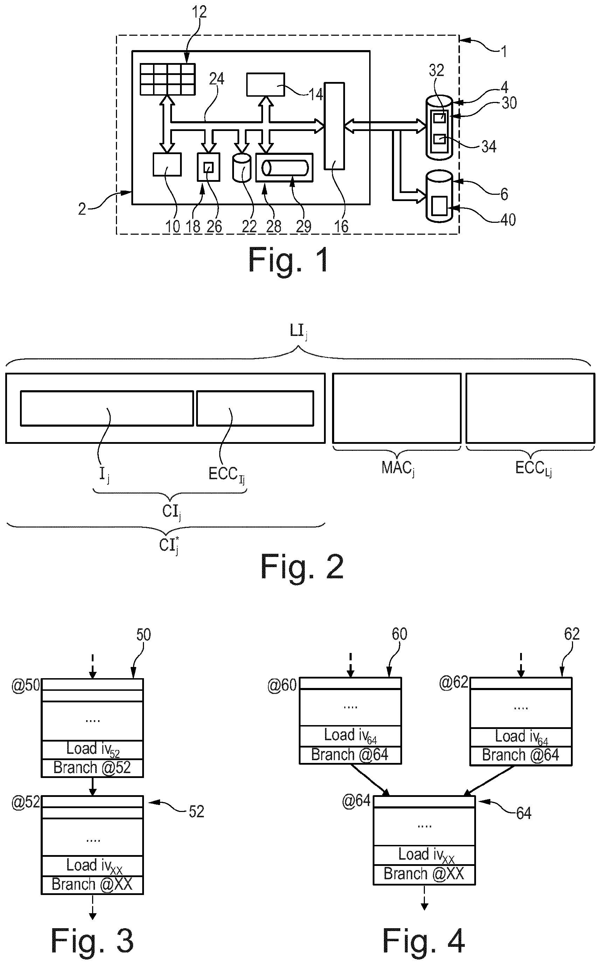

La figure 1 représente un appareil électronique 1 comportant un microprocesseur 2, une mémoire principale 4 et un support 6 de stockage de masse. Par exemple, l'appareil 1 est un ordinateur, un smartphone, une tablette électronique ou similaire.

Le microprocesseur 2 comporte ici :
- une unité arithmétique et logique 10 ;
- un ensemble 12 de registres ;
- un module de commande 14 ;
- une interface 16 d'entrée/sortie de données,
- un chargeur 18 d'instructions comportant un compteur ordinal 26,
- une file 22 d'instructions à exécuter, et
- un module matériel 28 de sécurisation.

La mémoire 4 est configurée pour stocker des instructions d'un code binaire 30 d'un programme devant être exécuté par le microprocesseur 2. La mémoire 4 est une mémoire à accès aléatoire. Typiquement, la mémoire 4 est une mémoire volatile. La mémoire 4 peut être une mémoire externe au microprocesseur 2 comme représenté sur la figure 1. Dans ce cas, la mémoire 4 est réalisée sur un substrat mécaniquement séparé du substrat sur lequel sont réalisés les différents éléments du microprocesseur 2 comme l'unité 10.

Ici, la mémoire 4 est divisée en mots-machines successifs de longueur fixe. Chaque mot-machine peut être transféré en un seul cycle d'horloge depuis la mémoire 4 jusque dans un registre du microprocesseur. A cet effet, la taille N_{MM} d'un mot-machine est égale au nombre maximum de bits qui peuvent être transférés simultanément de la mémoire 4 vers un registre de l'ensemble 12. Ici, la taille N_{MM} est strictement supérieure Nᵢₙₛₜ bits, où Nᵢₙₛₜ bits est le nombre de bits des instructions du jeu d'instructions du microprocesseur 2. Typiquement, Nᵢₙₛₜ est un entier supérieure ou égale à 8, 16, 32 ou 64. Dans cet exemple, Nᵢₙₛₜ est égal à 32 et la taille N_{MM} est égale à 128 bits.

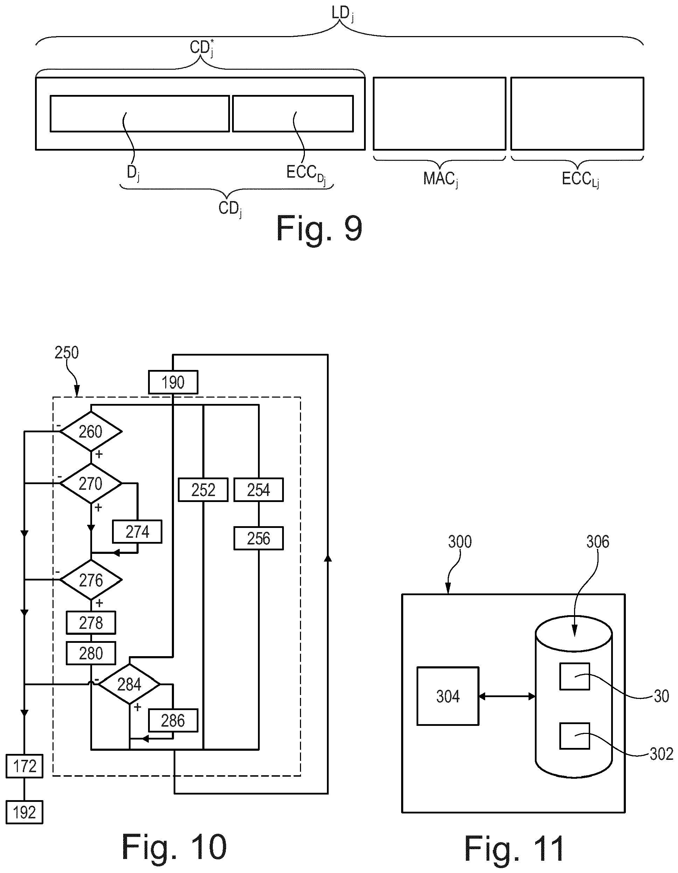

A titre d'illustration, le code binaire 30 comporte notamment un code machine 32 d'une fonction sécurisée et un bloc 34 de données nécessaires au déchiffrement du code binaire 30. Chaque fonction sécurisée correspond à un ensemble de plusieurs lignes de code, par exemple plusieurs centaines ou milliers de lignes de code, enregistrées à des adresses successives dans la mémoire 4. Ici, chaque ligne de code correspond à un mot-machine. Ainsi, une ligne de code est chargée dans un registre du microprocesseur 12 en une seule opération de lecture. De même, une ligne de code est écrite dans la mémoire 4 par le microprocesseur 2 en une seule opération d'écriture. Chaque ligne de code code soit une seule instruction soit une seule donnée. La structure d'une ligne de code des fonctions sécurisées est décrite en détail en référence aux figures 2 et 9.

Le bloc 34 est typiquement situé dans une plage d'adresses prédéterminée au début du code binaire 30. Ainsi, l'exécution du code binaire 30 débute par le chargement et le traitement des données du bloc 34. Ici, le bloc 34 comporte notamment :
- un cryptogramme ka* obtenu en chiffrant une clé ka à l'aide d'une clé publique pk_{CPU} du microprocesseur 2,
- le cryptogramme ivᵢₙᵢ* obtenu en chiffrant, à l'aide de la clé publique pk_{CPU}, un vecteur d'initialisation ivᵢₙᵢ utilisé pour chiffrer le premier bloc de base par lequel l'exécution du code machine 32 débute systématiquement,
- une signature S_{ka*} du cryptogramme ka* obtenue en chiffrant une étiquette, construite à partir du cryptogramme ka*, à l'aide d'une clé privée skₐᵤₜ d'un auteur du code binaire 30,
- un certificat cryptographique Cₐᵤₜ qui permet de vérifier la signature S_{ka*}, ce certificat étant signé à l'aide d'une clé privée skₒₛ d'un système d'exploitation et contenant une clé publique pkₐᵤₜ qui permet de vérifier l'authenticité de la signature S_{ka*}.

L'étiquette du cryptogramme ka* est typiquement obtenue en appliquant une fonction de hachage prédéterminée (« hash function » en anglais) sur le cryptogramme ka*. Une telle étiquette est plus connue sous le terme anglais de « digest ».

A titre d'illustration, le microprocesseur 2 est conforme à l'architecture RISC (« Reduced Instructions Set Computer »).

Ici, l'unité 10 est une unité arithmétique et logique de Nᵢₙₛₜ bits.

Le chargeur 18 charge dans la file 22 la prochaine instruction à exécuter par l'unité 10 à partir de la mémoire 4. Plus précisément, le chargeur 18 charge l'instruction sur laquelle pointe le compteur ordinal 26. Dans ce mode de réalisation, le chargeur 18 charge dans la file 22 systématiquement et à chaque fois une instruction Iⱼ et un code correcteur d'erreur ECC_{Ij}. Le code ECC_{Ij} est codé sur N_{ECCIj} bits, où N_{ECCIj} est un nombre entier souvent strictement inférieur à Nᵢₙₛₜ et, généralement, supérieur à 1 ou 2 ou 3 bits. A cet effet, la file 22 comprend une succession de plusieurs registres chacun de largeur égale à N_{ECCIj}+ Nᵢₙₛₜ bits.

L'unité 10 est notamment configurée pour exécuter les unes après les autres les instructions chargées dans la file 22. Les instructions chargées dans la file 22 sont généralement systématiquement exécutées dans l'ordre où ces instructions ont été enregistrées dans cette file 22. L'unité 10 est aussi capable d'enregistrer le résultat de ces instructions exécutées dans un ou plusieurs des registres de l'ensemble 12.

Dans cette description, on utilisera comme synonymes « exécution par le microprocesseur 2 » et « exécution par l'unité 10 ».

Le module 14 est configuré pour déplacer des données entre l'ensemble 12 de registres et l'interface 16. L'interface 16 est notamment apte à acquérir des données et des instructions, par exemple, depuis la mémoire 4 et/ou le support 6 extérieurs au microprocesseur 2.

Le module 28 est capable d'exécuter automatiquement les différentes opérations décrites en détails dans les chapitres suivants pour sécuriser l'exécution des fonctions sécurisées. Le module 28 fonctionne indépendamment et sans utiliser l'unité 10. Ainsi, il est capable de traiter les lignes de code avant et/ou après que celles-ci soient traitées par l'unité 10. A cet effet, il comporte notamment une mémoire non-volatile sécurisée 29. Aucun accès à cette mémoire 29 sans passer par l'intermédiaire du module 28 n'est prévu. Dans ce mode de réalisation, le module 28 est pré-programmé, par exemple lors de sa conception, pour exécuter des opérations telles que les opérations suivantes :
- vérifier un code correcteur d'erreur et corriger l'erreur à partir de ce code si nécessaire,
- vérifier un code détecteur d'erreur,
- construire un code détecteur ou correcteur d'erreur à partir d'une donnée,
- vérifier l'intégrité et l'authenticité d'une donnée à partir d'un code d'authentification de message plus connu sous l'acronyme MAC (« Message Authentification Code »),
- chiffrer une donnée pour obtenir un cryptogramme,
- déchiffrer un cryptogramme pour obtenir une donnée en claire,
- vérifier une signature cryptographique et/ou un certificat cryptographique,
- exécuter une fonction préprogrammée Fᵢᵥ.

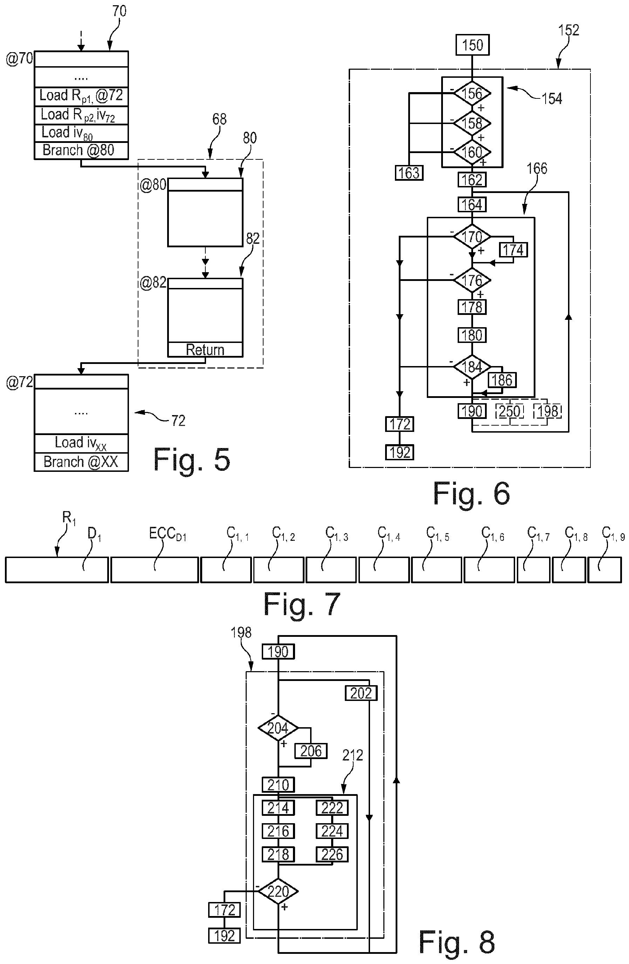

La mémoire 29 est utilisée pour stocker les informations secrètes nécessaires à la mise en œuvre du procédé de la figure 6. Ici, elle comporte donc notamment des informations secrètes pré-enregistrées avant le début de l'exécution du code binaire 30. En particulier, elle comporte les informations pré-enregistrées suivantes :
- une clé secrète k' utilisée pour la vérifications des codes d'authentification de message,
- un certificat cryptographique Cₒₛ émis par une autorité de confiance et comportant une clé publique pkₒₛ de cette autorité de confiance,
- un certificat cryptographique C_{CPU} qui est signé par l'autorité de confiance à l'aide d'une clé privée skₒₛ qui permet de chiffrer des données qui doivent être déchiffrées à l'aide de la clé publique pkₒₛ, ce certificat contenant une clé publique pk_{CPU},
- un clé privée secrète sk_{CPU} qui permet de déchiffrer les données qui ont été chiffrées à l'aide de la clé publique pk_{CPU}.

Dans cet exemple de réalisation, l'ensemble 12 comporte des registres généraux utilisables pour stocker tout type de données. La taille de chacun de ces registres est, par exemple, égale à N_{MM}.

Un bus d'échange de données 24 qui relie les différents composants du microprocesseur 2 entre eux est représenté sur la figure 1 pour indiquer que les différents composants du microprocesseur peuvent échanger des données entre eux.

Le support 6 est typiquement une mémoire non volatile. Par exemple, il s'agit d'une mémoire du type EEPROM ou Flash. Il contient ici une copie 40 de sauvegarde du code binaire 30. Typiquement, c'est cette copie 40 qui est automatiquement recopiée dans la mémoire 4 pour restaurer le code 30, par exemple, après une coupure de courant ou similaire ou juste avant que débute l'exécution du code 30.

### CHAPITRE III : SÉCURISATION DU CODE MACHINE :

Ici, la structure du code machine de la fonction sécurisée est décrite dans le cas particulier du code machine 32. Toutefois, ce qui est décrit dans ce cas particulier se transpose sans difficulté à tout code machine d'une fonction sécurisée.

Le code machine 32 comporte une succession de lignes de code LIⱼ enregistrées les unes après les autres dans la mémoire 4. Par la suite, dans ce chapitre, l'indice j est utilisé pour identifier la ligne de code LIⱼ parmi les autres lignes de code du code machine 32. De plus, l'indice j est aussi utilisé comme un numéro d'ordre indiquant dans quel ordre les lignes LIⱼ sont classées. Ainsi, on note LIⱼ₊₁ la ligne de code située immédiatement après la ligne LIⱼ. Chaque ligne de code LIⱼ code une instruction du jeu d'instructions du microprocesseur 2 apte à être exécutée après avoir été déchiffrée et décodée par l'unité 10 de ce microprocesseur.

La structure de toutes les lignes LIⱼ sont identiques. Elle est représentée en détail sur la figure 2 dans le cas particulier de la ligne LIⱼ. La ligne LIⱼ comporte un cryptogramme CIⱼ*, un code MACⱼ, et un code ECC_{Lj}.

Le cryptogramme CIⱼ* est obtenu en chiffrant une concaténation CIⱼ à l'aide de la clé secrète ka et d'un vecteur d'initialisation ivₖ. Plus précisément, le cryptogramme CIⱼ* est obtenu à l'aide de la relation suivante : CIⱼ* = fₖₐ(CIⱼ ; ivk), où fₖₐ est une fonction de chiffrement correspondant à une fonction de déchiffrement fₖₐ⁻¹ préprogrammée dans le module 28. Typiquement, la fonction fₖₐ est une fonction de chiffrement symétrique. Dès lors, la clé ka permettant de déchiffrer le cryptogramme CIⱼ* est préenregistrée dans la mémoire 29 afin de permettre au module 28 de déchiffrer ce cryptogramme CIⱼ*. Comme expliqué plus loin, le vecteur d'initialisation ivk est quant à lui contenu dans une ligne de code précédente du code machine 32.

La concaténation CIⱼ est ici la concaténation d'une instruction Iⱼ à exécuter par le microprocesseur 2 et d'un code ECC_{Ij}. Le code ECC_{Ij} permet de détecter une erreur dans l'instruction Iⱼ et de corriger cette erreur. Par exemple, le code ECC_{Ij} peut être le code connu sous l'acronyme BCH (Bose, Ray-Chaudhuri, Hocquenghem) qui présente l'avantage d'être particulièrement facile à mettre en œuvre. Toutefois, tout autre code correcteur d'erreur connu peut être mis en œuvre. La taille du code ECC_{Ij} est supérieure ou égale à 1 ou 2 ou 3 bits et, généralement, inférieure à Nᵢₙₛₜ. La taille du code ECC_{Ij} est déterminée en fonction de la robustesse souhaitée. Plus on veut être capable de corriger un nombre de bits erronés important dans l'instruction Iⱼ, plus la taille du code ECC_{Ij} sera grande.

Le code MACⱼ est un code permettant de vérifier l'intégrité et l'authenticité du cryptogramme CIⱼ*. Ce code est communément appelé « code d'authentification de message » et connu sous l'acronyme MAC (« Message Authentification Code »). Un tel code MACⱼ est obtenu en construisant une étiquette à partir du cryptogramme CIⱼ* qui comporte normalement moins de bits que le cryptogramme Ciⱼ*. Cette étiquette est construite à l'aide d'une fonction prédéterminée telle qu'une fonction de hachage. Ensuite, cette étiquette est chiffrée avec la clé secrète k' connue seulement de l'auteur du code binaire 30 et du microprocesseur 2. Ici, la clé k' est préenregistrée dans la mémoire 29.

À titre d'exemple, pour générer le cryptogramme CIⱼ* et le code MACⱼ, un algorithme de chiffrement par flot authentifié est utilisé. Cet algorithme de chiffrement par flot authentifié peut être choisi parmi les différents candidats à la compétition CAESAR (« Compétition for Authentificated Encryption : Security, Applicability, and Robustness ») comme par exemple l'un des algorithmes désignés par les noms suivants : « ACORN », « ASCON », « SILC », « CLOC », « JAMBU », « KETJE ».

Le code ECC_{Lj} est un code correcteur d'erreur qui permet de détecter et de corriger une erreur dans le cryptogramme CIⱼ* et le code MACⱼ. Il est par exemple construit comme décrit dans le cas du code ECC_{Ij}.

Par la suite, on note @ⱼ l'adresse dans la mémoire 4 à laquelle est enregistrée la ligne LIⱼ.

Le code machine 32 se compose d'une succession de blocs de base qui doivent être exécutés les uns après les autres. Ici, chaque bloc de base se compose d'une succession de lignes de code qui chacune comporte le cryptogramme CIⱼ* de l'instruction Iⱼ à exécuter.

La figure 3 représente un premier agencement de deux blocs de base 50 et 52 du code machine 32. Dans ce premier agencement, les blocs de base 50 et 52 sont systématiquement exécutés l'un après l'autre. Dans l'ordre d'exécution, le bloc de base 50 précède le bloc de base 52. Dans cette figure et les figures suivantes :
- l'ordre d'exécution des blocs de base est représenté par une flèche qui pointe du bloc de base précédent vers le bloc de base suivant,
- une flèche en pointillés qui pointe sur un bloc de base représenté indique que le ou les blocs de base qui précèdent ce bloc de base n'ont pas été représentés pour simplifier la figure,
- une flèche en pointillés qui pointe dans le vide depuis un bloc de base représenté indique que le ou les blocs de base suivants ce bloc de base représenté n'ont pas été représentés pour simplifier la figure,
- le symbole « ... » à l'intérieur d'un bloc de base indique que toutes les lignes de code de ce bloc de base n'ont pas été représentées.

Chaque bloc de base débute par une adresse de branchement et se termine par une ligne de code qui contient le cryptogramme d'une instruction de branchement. Sur la figure 2, les symboles « @50 » et « @52 » à côté de la première ligne de code de chaque bloc de base désignent les adresses de branchement, respectivement, des blocs de base 50 et 52. Le symbole « @XX » désigne l'adresse de branchement d'un autre bloc de base non représenté sur la figure 2.

Le symbole « Load ivₓₓ» indiqué dans l'avant dernière ligne de code du bloc de base indique que cette ligne de code comporte le cryptogramme d'une instruction qui, lorsqu'elle est exécutée par le microprocesseur 2, provoque le chargement d'un nouveau vecteur d'initialisation ivₓₓ dans la mémoire 29. Ainsi, le symbole « Load iv₅₂» indique que le vecteur d'initialisation iv₅₂ est chargé dans la mémoire 29 avant que débute l'exécution du bloc de base 52.

Le symbole « Branch @XX» indiqué à l'intérieur de la dernière ligne de code du bloc de base indique que cette dernière ligne comporte le cryptogramme d'une instruction qui, lorsqu'elle est exécutée par le microprocesseur 2, provoque un branchement inconditionnel vers l'adresse de branchement @XX.

Ici, le même vecteur d'initialisation ivk est utilisé pour déchiffrer tous les cryptogrammes CIⱼ* de toutes les lignes de code du même bloc de base BBₖ. L'indice k identifie sans ambiguïté le bloc de base BBk parmi l'ensemble des blocs de base du code machine 32. Dans les figures et dans la description, le symbole ivk est par la suite utilisé pour désigner de façon générale le vecteur d'initialisation à utiliser pour déchiffrer le bloc de base BBₖ. De plus, dans les cas simples comme celui représenté sur la figure 3 où deux blocs de base se suivent dans l'ordre d'exécution du code machine 32, l'indice k est aussi utilisé pour indiquer l'ordre dans lequel ces blocs de base sont exécutés. Par exemple, la notation BBₖ₋₁ est, dans ces cas simples, utilisée pour désigner le bloc de base systématiquement exécuté immédiatement avant le bloc de base BBk.

Ici, le vecteur d'initialisation ivk est unique pour chaque bloc de base BBk. Par « unique pour chaque bloc de base», on désigne le fait que la probabilité que deux blocs de base différent du code machine 32 soient chiffrés avec le même vecteur d'initialisation ivₖ est inférieure à une chance sur 100 ou sur 1000. En particulier, l'expression « unique pour chaque bloc de base» couvre donc le cas où les vecteurs d'initialisation ivk de tous les blocs de base sont systématiquement différents les uns des autres. Par exemple, dans un mode de réalisation simple, lors de la génération du code 32, les vecteurs d'initialisation ivk de chaque bloc de base sont tirées de façon aléatoire ou pseudo-aléatoire dans l'ensemble {1 ; ... ;2^{Ninst}}.

Comme représenté sur la figure 3, dans le code 32, le vecteur d'initialisation ivk est chargé dans la mémoire 29 uniquement lors de l'exécution d'un bloc de base précédent le bloc de base BBk. Sur la figure 3, le vecteur d'initialisation iv₅₂ nécessaire pour déchiffrer le bloc 52 est chargé lors de l'exécution du bloc 50.

La figure 4 représente un autre agencement possible de plusieurs blocs de base du code 32 dans le cas particulier de deux blocs de base précédents 60 et 62 et d'un bloc de base suivant 64. Ici, les blocs 60 et 64 sont, par exemple, identiques, respectivement, aux blocs 50 et 52 sauf que le vecteur d'initialisation du bloc 64 est noté «iv₆₄». Le bloc 62 est construit comme le bloc 60 et, en particulier, il se termine par deux lignes de code qui codent les mêmes instructions que celles codées dans les deux dernières lignes du bloc 60. Toutefois, même si ces deux dernières lignes codent les mêmes instructions, les cryptogrammes de ces instructions sont différents parce que le bloc 62 est chiffré en utilisant un vecteur d'initialisation iv₆₂ différent du vecteur iv₆₀ utilisé pour chiffrer le bloc 60. Les autres lignes de code du bloc 62 sont différentes de celles du bloc 60.

La figure 5 représente une partie de l'architecture du code machine 32 lorsqu'un bloc de base se termine par un appel à un code machine 68 d'une sous-fonction sécurisée. Le code machine 68 est agencé comme précédemment décrit pour le code machine 32. Il se compose donc d'une succession de blocs de base. Pour simplifier la figure 5, seul le premier bloc de base 80 et le dernier bloc de base 82 de ce code machine 68 ont été représentés.

Le code machine 68 peut être appelé à partir de différents blocs de base du code machine 32 et, lorsque l'exécution du code machine 68 est terminée, le flot d'instructions peut retourner vers différents blocs de base du code machine 32. Ainsi, le bloc de base qui doit être exécuté après le bloc de base 82 dépend du bloc de base qui a appelé le code machine 68. Par conséquent, contrairement à ce qui a été décrit en référence aux figures 3 et 4, le bloc de base 80 ne se termine pas par une ligne de code qui code une instruction de branchement systématiquement vers la même adresse mais par une ligne de code qui code une instruction « Return ». Par conséquent, sur la figure 5, le symbole « Return » est utilisé pour identifier la dernière ligne du bloc 82.

Contrairement à l'instruction « Branch » précédemment décrite, l'instruction «Return» ne comporte pas explicitement l'adresse du prochain bloc de base à exécuter. L'instruction « Return » n'est pas non plus précédée d'une instruction de chargement d'un vecteur d'initialisation à utiliser pour déchiffrer le prochain bloc de base à exécuter.

Ici, lorsque l'instruction « Return » est exécutée par le microprocesseur 2, elle provoque :
- le chargement d'un nouveau vecteur d'initialisation contenu dans un registre Rₚ₂ du microprocesseur, puis
- un saut inconditionnel vers une adresse contenue dans un registre Rₚ₁ du microprocesseur 2.

Ces registres Rₚ₁ et Rₚ₂ sont chargés avec les valeurs adéquates lors de l'exécution du bloc de base à partir duquel le code machine 68 est appelé. Par exemple, sur la figure 5, le code machine 68 est appelé à partir d'un bloc de base 70 et, après l'exécution du code machine 68, l'exécution du code machine 32 doit se poursuivre par l'exécution d'un bloc de base 72. Le bloc de base 70 se termine par deux lignes codant respectivement, le chargement du vecteur d'initialisation iv₈₀ dans la mémoire 29 et un saut inconditionnel vers l'adresse @80 du bloc de base 80 du code machine 68.

De plus, avant ces lignes, le bloc 70 comporte aussi :
- une ligne qui code une instruction de chargement dans le registre Rₚ₁ de l'adresse @72 du bloc de base 72, et
- une ligne qui code une instruction de chargement dans le registre Rₚ₂ du vecteur d'initialisation iv₇₂ nécessaire pour déchiffrer le bloc de base 72.

Sur la figure 5, ces lignes sont désignées par les symboles, respectivement « Load Rₚ₁, @72 » et « Load Rₚ₂, iv₇₂ ».

Ainsi, lors de l'exécution de l'instruction « Return », le prochain bloc de base exécuté sera le bloc de base 72 et le vecteur d'initialisation utilisé pour le déchiffrer sera le vecteur iv₇₂ chargé dans le registre Rₚ₂.

De préférence, les registres Rₚ₁ et Rₚ₂ sont des registres d'une pile d'appel de manière à permettre des appels à des sous-fonctions à partir des blocs de base d'autres sous-fonctions.

La figure 6 représente un procédé d'exécution du code binaire 30 par le microprocesseur 2.

Le procédé débute par une étape 150 de fourniture du code binaire 30 dans la mémoire 4. Pour cela, par exemple, le microprocesseur 2 recopie la copie 40 à l'intérieur de la mémoire 4 pour obtenir le code binaire 30 enregistré dans la mémoire 4.

Ensuite, lors d'une phase 152, le microprocesseur 2 exécute le code binaire 30 et, en particulier, le code machine 32.

L'exécution du code binaire 30 commence par une étape 154 d'authentification de l'auteur de ce code binaire. Lors de cette étape, le module 28 réalise successivement les opérations suivantes :
- lors d'une opération 156, le module 28 vérifie l'authenticité du certificat C_{CPU} à l'aide de la clé publique pk_{OS} contenue dans le certificat C_{OS}.
- lors d'une opération 158, le module 28 charge le certificat C_{AUT} à partir du bloc 34 puis vérifie son authenticité à l'aide de la clé publique pk_{OS} contenue dans le certificat Cos.
- lors d'une opération 160, le module 28 charge la signature S_{ka*} à partir du bloc 34 et vérifie son authenticité à l'aide de la clé pk_{AUT} contenue dans le certificat C_{AUT}.

Si toutes les opérations de vérification 156, 158 et 160 ont été réussies avec succès, alors le code binaire est correctement authentifié et le procédé se poursuit par une étape 162. À l'inverse, si l'une des opérations 156, 158 ou 160 n'a pas été réussie avec succès, le module 28 considère alors que l'authentification de l'auteur du code binaire 30 a échoué et le procédé se poursuit par une étape 163. Lors de l'étape 163, l'exécution du code binaire 30 est arrêtée.

Lors de l'étape 162, le module 28 charge les cryptogrammes ka* et ivᵢₙᵢ* contenus dans le bloc 34 et les déchiffre à l'aide de la clé sk_{CPU} contenue dans la mémoire 29. À l'issue de l'étape 162, la clé ka et le vecteur d'initialisation ivᵢₙᵢ utilisé pour déchiffrer le premier bloc de base du code machine 32 sont contenus dans la mémoire 29.

Après l'étape 162, le microprocesseur 2 exécute, les uns après les autres, les blocs de base en commençant par le premier bloc de base BBᵢₙᵢ du code machine 32.

L'exécution de chaque bloc de base consiste à exécuter, dans l'ordre où les lignes de code LIⱼ de ce bloc de base sont enregistrées dans la mémoire 4, les instructions codées par chacune de ces lignes de code.

Pour chacune des lignes de code LIⱼ à exécuter du code machine 32, le microprocesseur 2 exécute les étapes suivantes.

Lors d'une étape 164, le microprocesseur 2 charge dans un registre de l'ensemble 12, la ligne de code enregistrée à l'adresse @ⱼ contenue dans le compteur ordinal 26.

Ensuite, le module 28 procède à une étape 166 de sécurisation de l'instruction codée dans la ligne de code chargée.

Le fonctionnement de l'étape 166 est maintenant décrit dans le cas de la ligne LIⱼ. Plus précisément, lors de l'étape 166, le module 28 réalise successivement les opérations suivantes.

Lors d'une opération 170, le module 28 vérifie s'il existe une erreur dans le cryptogramme CIⱼ* ou le code MACⱼ à l'aide du code ECC_{Lj} contenu dans la ligne LIⱼ chargée. Par exemple, pour cela, le module 28 construit, à l'aide d'une fonction préprogrammée et du cryptogramme CIⱼ* et du code MACⱼ, un code ECC_{Lj}'. Si le code ECC_{Lj}' est différent du code ECC_{Lj}, alors une erreur est détectée. Si une erreur est détectée, le module 28 procède immédiatement à une étape 172.

Lors de l'étape 172, le module 28 déclenche le signalement d'une faute d'exécution.

Ici, en parallèle de l'étape 172, si une erreur est détectée, le module 28 procède à une opération 174. Lors de l'opération 174, il corrige le cryptogramme CIⱼ* et le code MACⱼ à partir des informations contenues dans le code ECC_{Lj}. À l'issue de l'étape 174, le cryptogramme CIⱼ* corrigé et le code MACⱼ corrigé sont utilisés à la place, respectivement, du cryptogramme CIⱼ* et du code MACⱼ contenus dans la ligne LIⱼ.

L'opération 170 permet notamment de détecter et de corriger des fautes introduites dans les lignes de code stockées dans la mémoire 4 ou dans le support 6.

À l'issue de l'opération 174 ou si aucune erreur n'a été détectée lors de l'opération 170, le procédé se poursuit par une opération 176.

Lors de l'opération 176, le module 28 vérifie l'intégrité et l'authenticité du cryptogramme CIⱼ* à l'aide du code MACⱼ. Par exemple, pour cela, le module 28 construit une étiquette du cryptogramme CIⱼ* puis chiffre cette étiquette avec la clé k' contenue dans sa mémoire 29. Si le cryptogramme ainsi construit est identique au code MACⱼ chargé, alors l'intégrité et l'authenticité du cryptogramme CIⱼ* est confirmée. Dans ce cas, le module 28 procède à une opération 178. Dans le cas contraire, le module 28 procède à l'étape 172.

L'opération 176 permet d'une part de valider l'authenticité de la ligne de code chargée et aussi de valider que, lors de l'opération 174, le cryptogramme CIⱼ* et/ou le code MACⱼ ont correctement été corrigés. La vérification de l'authenticité empêche le remplacement de la ligne de code par une autre ligne de code construite par un auteur qui ne connaît pas la clé k'.

Lors de l'opération 178, le module 28 déchiffre le cryptogramme CIⱼ* en utilisant la clé ka et le vecteur d'initialisation ivk pour obtenir l'instruction Iⱼ et le code ECC_{Ij} déchiffrés. La clé ka a été enregistrée dans la mémoire 29 lors de l'étape 162. Le vecteur ivₖ nécessaire pour déchiffrer le cryptogramme CIⱼ* a été enregistré dans la mémoire 29 lors de l'exécution du bloc de base précédent celui qui contient cette ligne LIⱼ actuellement traitée. Si la ligne LIⱼ est contenue dans le premier bloc de base BBᵢₙᵢ du code machine 32, c'est le vecteur ivᵢₙᵢ enregistré dans la mémoire 29 lors de l'étape 162 qui est utilisé.

Ici, c'est l'exécution de l'instruction de branchement par l'unité 10 qui indique au module 28 qu'il doit remplacer le vecteur d'initialisation actuellement utilisé par le vecteur d'initialisation chargé lors de l'exécution du bloc de base précédent.

Ensuite, lors d'une opération 180, le module 28 enregistre l'instruction Iⱼ déchiffrée et le code ECC_{Ij} déchiffré dans la file 22.

Une fois que l'unité 10 a exécuté toutes les instructions qui précédent l'instruction Iⱼ dans la file 22, c'est-à-dire lorsque l'instruction Iⱼ est la prochaine instruction à exécuter par l'unité 10, le module 28 procède à une opération 184.

Lors de l'opération 184, le module 28 vérifie s'il existe une erreur dans l'instruction Iⱼ contenue dans la file 22 à l'aide du code ECC_{Ij} associé à l'instruction Iⱼ et contenu dans cette même file 22. Cette opération est réalisée de façon similaire à ce qui a été décrit pour l'opération 170.

Si le module 28 détecte une erreur, alors il procède immédiatement à l'étape 172. De plus, en parallèle, lors d'une opération 186, le module 28 corrige l'instruction Iⱼ à l'aide du code ECC_{Ij}. L'opération 186 est similaire à l'opération 174.

Ensuite, à l'issue de l'opération 186 ou si aucune erreur n'a été détectée lors de l'opération 184, l'étape 166 se termine et le procédé se poursuit par une étape 190 d'exécution de l'instruction Iⱼ par l'unité 10.

Comme représenté sur la figure 6, en parallèle de l'étape 190, le procédé peut comporter :
- une étape 198 de sécurisation de l'unité 10, et/ou
- une étape 250 de sécurisation des données traitées.

Ces étapes 198 et 250 sont décrites plus en détail dans les chapitres suivants.

L'opération 184 permet de détecter une modification de l'instruction Iⱼ qui interviendrait entre l'instant où elle est enregistrée dans la file 22 et l'instant où elle est exécutée par l'unité 10. L'opération 184 permet aussi de déclencher une faute d'exécution si le flot de contrôle du code machine 32 a été modifié. En effet, une modification du flot de contrôle se traduit par le fait qu'après l'exécution du bloc de base BBₖ₋₁ ce n'est pas le bloc de base BBₖ qui est exécuté mais un autre bloc de base BBₜ. Dans ce cas, lors de l'exécution du bloc BBₖ₋₁, le vecteur d'initialisation ivₖ₋₁ est chargé dans la mémoire 29. Dès lors, lors de l'exécution du bloc BBₜ, le cryptogramme CIⱼ* est déchiffré à l'aide du vecteur ivₖ qui correspond au BBₖ et non pas à l'aide du vecteur ivt qui correspond au bloc BBₜ. Par conséquent, le déchiffrement du cryptogramme CIⱼ* à l'aide du vecteur ivₖ conduit à l'obtention d'une instruction Iⱼ et d'un code ECC_{Ij} incorrects et ceci est détecté lors de l'opération 184.

De façon similaire, l'opération 184 permet aussi de détecter une perturbation de l'exécution de l'opération « Return » du bloc de base 82.

Lors de l'exécution du code machine 32, si des attaques conduisent à altérer une instruction à protéger ou à modifier le flot de contrôle, le microprocesseur 2 signale, lors de l'étape 172, une faute dans l'exécution du code machine 32. En réponse à un tel signalement, lors d'une étape 192, le microprocesseur 2 met en œuvre une ou plusieurs contre-mesures. De très nombreuses contre-mesures sont possibles. Les contre-mesures mises en œuvre peuvent avoir des degrés de sévérité très différents. Par exemple, les contre-mesures mises en œuvre peuvent aller d'un simple affichage ou une simple mémorisation d'un message d'erreur sans interrompre l'exécution normale du code machine 32 jusqu'à une mise hors service définitive du microprocesseur 2. Le microprocesseur 2 est considéré comme étant hors service lorsqu'il est définitivement placé dans un état où il est incapable d'exécuter un quelconque code machine. Entre ces degrés de sévérité extrêmes, il existe de nombreuses autres contre-mesures possibles telles que :
- l'indication par l'intermédiaire d'une interface homme-machine de la détection des fautes,
- l'interruption immédiate de l'exécution du code machine 32 et/ou sa réinitialisation, et
- la suppression du code machine 32 de la mémoire 4 et/ou la suppression de la copie 40 de sauvegarde et/ou la suppression des données secrètes.

De plus, ici, la contre-mesure mise en œuvre lors de l'étape 192 peut être sélectionnée en fonction de l'erreur détectée et donc en fonction de l'opération qui a conduit à la détection de cette faute. Par exemple, la contre-mesure sélectionnée ne sera pas la même selon que l'erreur a été détectée lors de l'opération 170, 176 ou 184.

### CHAPITRE IV: SÉCURISATION DE L'UNITÉ ARITHMÉTIQUE ET LOGIQUE 10 :

Dans ce chapitre, par « instruction arithmétique et logique », on désigne une instruction du jeu d'instructions du microprocesseur 2 qui, lorsqu'elle est exécutée par ce microprocesseur, enregistre dans un registre Rᵣₑₛ du microprocesseur une donnée obtenue :
- soit en modifiant les bits d'une seule donnée D₁ enregistrée dans un registre du microprocesseur, ou,
- soit en combinant entre eux les bits de plusieurs données D₁ à Dₙ enregistrées, respectivement, dans des registres R₁ à Rₙ du microprocesseur 2, où n est un entier égal au nombre de données à combiner.
Classiquement, n est égal à deux dans le cas où plusieurs données doivent être combinées. n égal à un correspond au cas où l'instruction arithmétique et logique modifie les bits d'une seule donné D₁.

Les registres dans lesquels sont enregistrées la ou les données à traiter sont typiquement identifiés par un ou plusieurs opérandes de l'instruction arithmétique et logique. De même, le registre Rᵣₑₛ dans lequel le résultat Dᵣₑₛ₋ₚ de l'instruction arithmétique et logique doit être enregistré peut aussi être identifié par un opérande de cette instruction arithmétique et logique.

L'opcode de l'instruction arithmétique et logique identifie l'opération à exécuter par l'unité 10 pour modifier ou combiner la ou les données D₁ à Dₙ. Par la suite, le symbole « * » est utilisé pour désigner de façon générique cette opération. Ainsi, la notation D₁*D₂*...*Dₙ désigne de façon générique l'opération exécutée par l'instruction arithmétique et logique lorsqu'elle est exécutée par le microprocesseur 2.

Dans le cas où n est égal à un, l'opération arithmétique et logique est par exemple choisie dans le groupe constitué :
- des opérations de décalage à droite et à gauche des bits de la donnée D₁, et
- des opérations d'extraction d'une plage de bits prédéfinie de la donnée D₁.

Dans le cas où n est supérieur ou égal à deux, l'opération « * » est choisie dans le groupe constitué des opérations suivantes :
- l'opération arithmétique d'addition,
- l'opération arithmétique de soustraction,
- l'opération arithmétique de multiplication,
- l'opération arithmétique de division,
- l'opération logique « OU »,
- l'opération logique « OU exclusif »,
- l'opération logique « ET ».

En injectant des fautes lors du fonctionnement de l'unité 10, il est possible de perturber son fonctionnement de sorte que le résultat de l'exécution de l'instruction arithmétique et logique ne correspond pas à celui attendu. On dit alors qu'on a provoqué un dysfonctionnement de l'unité 10.

Ce chapitre décrit une solution pour détecter un tel dysfonctionnement de l'unité 10. Ici, cette solution est décrite dans le cas particulier où elle est implémentée en combinaison avec la solution décrite au chapitre précédent. Elle correspond à l'étape 198 représentée sur la figure 6.

Les registres R₁ à Rₙ et le registre Rᵣₑₛ sont, par exemple, des registres de l'ensemble 12 du microprocesseur 2.

Par la suite, l'étape 198 est décrite dans le cas particulier où les instructions arithmétique et logique dont on souhaite sécuriser l'exécution sont les instructions de la liste suivante :
1 : L'instruction d'addition des données D₁ et D₂ contenues dans, respectivement, les registres R₁ et R₂. Cette opération est désignée par le pseudocode « ADD R₁, R₂ ».
2 : L'instruction de soustraction des données D₁ et D₂ contenues dans, respectivement, les registres R₁ et R₂. Le pseudocode utilisé pour désigner cette opération est « SUB R₁, R₂ ».
3 : L'instruction de multiplication des données D₁ et D₂ contenues dans, respectivement, les registres R₁ et R₂. Le pseudocode utilisé pour désigner cette opération est « MUL R₁, R₂ ».
4 : L'instruction de division de la donnée D₁ par la donnée D₂ contenue dans, respectivement, les registres R₁ et R₂. Le pseudocode utilisé pour désigner cette opération est « DIV R₁, R₂ ».
5 : L'instruction « OU exlcusif » entre les données D₁ et D₂ contenues dans, respectivement, les registres R₁ et R₂. Le pseudocode utilisé pour désigner cette opération est « XOR R₁, R₂ ».
6 : L'instruction « ET logique » entre les données D₁ et D₂ contenues dans, respectivement, les registres R₁ et R₂. Le pseudocode utilisé pour désigner cette opération est « AND R₁, R₂ ».
7 : L'instruction « OU logique » entre les données D₁ et D₂ contenues dans, respectivement, les registres R₁ et R₂. Le pseudocode utilisé pour désigner cette opération est « OR R₁, R₂ ».
8 : L'instruction de décalage d'un bit à droite de la donnée D₁ contenue dans le registre R₁. Le pseudocode utilisé pour désigner cette opération est « SHIFTR R₁ ».
9 : L'instruction de décallage d'un bit à gauche de la donnée D₁ contenue dans le registre R₁. Le pseudocode utilisé pour désigner cette opération est « SHIFTL R₁ ».

Par la suite, le numéro associé par la liste ci-dessus à chaque instruction arithmétique et logique est utilisé pour identifier cette instruction. Ainsi, l'instruction I₁ est l'addition, l'instruction I₂ est la soustraction et ainsi de suite.

Ici, la taille de chaque donnée D₁, D₂ et Dᵣₑₛ est par exemple égale à la taille des instructions Iⱼ du jeu d'instructions du microprocesseur 2. Ici, cette taille est donc égale à 32 bits.

Les structures des registres R₁, R₂ et Rᵣₑₛ sont identiques et représentées dans le cas particulier du registre R₁ sur la figure 7.

Le registre R₁ comporte :
- une plage de 32 bits contenant la donnée D₁,
- une plage contenant un code ECC_{D1} permettant de détecter et de corriger une erreur dans la donnée D₁, et
- neuf plages de bits successives contenant, respectivement, des codes C_{1,1} à C_{1,9}.

Le code ECC_{D1} est par exemple construit comme décrit dans le cas du code ECC_{Ij} sauf qu'il est construit à partir de la donnée D₁ et non pas à partir de l'instruction Iⱼ. Par exemple, ce code ECC_{D1} est généré lors de l'exécution ou lors de la génération du code binaire 30.

Lors de l'enregistrement de la donnée D₁ dans le registre R₁, chaque code C_{1,1} à C_{1,9} est généré par le module 28 à l'aide d'une relation préprogrammée définie de façon générique de la façon suivante : C_{i,*} = F_{*}(Dᵢ) où :
- l'indice i identifie un registre parmi les registres R₁, R₂ et Rᵣₑₛ,
- l'indice * identifie l'instruction arithmétique et logique parmi les instructions I₁ à I₉, et
- la fonction F* est une fonction préprogrammée dans le module 28 associée à l'instruction arithmétique et logique identifiée par l'indice *.

La taille du code C_{i,*} est notée N_{i,*}. La taille N_{i,*} est généralement inférieure à la taille des données D₁, D₂ et Dᵣₑₛ et souvent au moins deux fois plus petite.

Ici, les valeurs 1, 2 et 3 de l'indice i désigne, respectivement, les registres R₁, R₂ et Rᵣₑₛ. Les valeurs 1 à 9 de l'indice * désigne, respectivement, les instructions I₁ à I₉.

Dans le cas des instructions pour lesquelles n est supérieur ou égal à 2, c'est-à-dire ici dans le cas des instructions I₁ à I₇, la fonction F* est un homomorphisme d'un ensemble A muni de l'opération « * » vers un ensemble B muni de l'opération « # » telle que F*(D₁*D₂) = F_{*}(D₁) # F*(D2). Ici, l'ensemble A est l'ensemble des nombres codables sur 32 bits, c'est-à-dire l'ensemble des données D₁ et D₂ possibles. L'ensemble B est l'ensemble des nombres codables sur N_{i,*} bits. Autrement dit, en utilisant les notations précédemment introduites, la fonction F* est telle que F_{*}(Dᵣₑₛ₋ₚ) = C_{1,*} # C_{2,*} en cas d'absence de dysfonctionnement de l'unité 10.

Pour chaque instruction I₁ à I₇, il est possible de trouver de nombreuses fonctions F* qui conviennent. Ci-dessous, à titre d'illustration, pour chacune des instructions I₁ à I₇, une ou plusieurs fonctions F* possibles sont données.

Une fonction EDC(Dᵢ) qui retourne à un code détecteur d'erreur de la donnée Dᵢ. Cette fonction EDC est par exemple une somme de contrôles (« checksum » en anglais). De telles fonctions EDC(Dᵢ) présentent une ou plusieurs des propriétés suivantes :
- EDC(D₁ + D₂) = EDC(D₁) + EDC(D₂),
- EDC(D₁ - D₂) = EDC(D₁) - EDC(D₂),
- EDC(D₁ x D₂) = EDC(D₁) × EDC(D₂),
où les symboles « + », « - », et « x » désignent respectivement, les opérations d'addition, de soustraction et de multiplication.

Ainsi, de telle fonctions EDC conviennent pour la réalisation des fonctions F₁, F₂ et F₃. On notera de plus que dans ce cas particulier, les opérations « # » et « * » sur les ensembles B et A sont identiques.

La fonction p(Dᵢ) qui retourne 0 si la donnée Dᵢ est paire et 1 sinon. Cette fonction présente la propriété suivante : p(D₁ + D₂) = p(D₁) XOR p(D₂) et p(D₁ x D₂) = p(D₁) OR p(D₂), où les symboles « XOR » et « OR » désignent, respectivement, les opérations « OU exclusif » et « OU ».Cette fonction convient donc pour l'implémentation des fonctions F₁ et F3.

Une fonction logarithme notée « Log ». Une fonction logarithme présente les propriétés suivantes : Log(D₁ x D₂) = Log(D₁) + Log(D₂) et Log (D₁/D₂) = Log(D₁) - Log(D₂), où le symbole « / » désigne l'opération de division. Ainsi, un logarithme convient pour des implémentations des fonctions F₃ et F₄. Dans ce cas, l'opération « # » est l'addition ou la soustraction.

La fonction CS(Dᵢ) qui retourne la somme de contrôles de la donnée Dᵢ. Cette fonction présente les propriétés suivantes :
- CS(D₁ XOR D₂) = CS(D₁) XOR CS(D₂),
- CS(D₁ AND D₂) = CS(D₁) AND CS(D₂),
- CS(D₁ OR D₂) = CS(D₁) OR CS(D₂),
où le symbole « AND » désigne l'opération « ET » logique. Ainsi, cette fonction convient pour une implémentation des fonctions F₅, F₆ et F₇.

Dans le cas où n est égal à 1, c'est-à-dire ici dans le cas des instructions I₈ et I₉, la fonction F* n'est pas un homomorphisme. Dans ce cas, la fonction F* est tel qu'il existe une fonction T* tel que F_{*}(D₁) = T_{*}(F_{*}(D₁)). Autrement dit, la fonction T* est invariante par F_{*}(D₁). La fonction T* retourne donc le code C_{1,*} à partir du code C_{1,*}.

Dans le cas de l'instruction I₉, la fonction F₉ est par exemple la fonction qui calcule une somme de contrôle sur tous les bits de la donnée D₁ sauf sur son bit de poids le plus fort, c'est-à-dire sans prendre en compte le bit le plus à gauche de la donnée D₁. La fonction T₉ est alors la même somme de contrôle sur tous les bits de F₉(D₁) sauf le bit de poids le plus faible, c'est-à-dire celui situé le plus à droite dans F₉(D₁). Avec de telles fonctions F₉ et T₉, on a bien la relation suivante : F₉(D₁) = T₉(F₉(D₁)). Ces fonctions F₉ et T₉ conviennent donc pour l'instruction I₉.

De plus, en choisissant les fonctions F₈ et T₈ égales, respectivement, aux fonctions T₉ et F₉, on obtient une implémentation possible pour les fonctions F₈ et T₈.

La figure 8 représente le détail des opérations réalisées par microprocesseur 2 lors de l'exécution de l'étape 198 pour sécuriser l'exécution des instructions arithmétique et logique I₁ à I₉.

À chaque fois qu'une instruction de chargement d'une donnée dans l'un des registres Rᵢ est exécutée par l'unité 10, lors de l'étape 190, la donnée Dᵢ et le code EEC_{Di} sont écrits dans ce registre Rᵢ.

En réponse, lors d'une opération 202, pour chaque instruction I₁ à I₉, le module 28 calcule chacun des codes C_{i,*} correspondant à l'aide de la relation C_{i,*} = F_{*}(Dᵢ), où :
- Dᵢ est la nouvelle donnée chargée dans le registre Rᵢ, et
- la fonction F* est la fonction préprogrammée dans le module 28 et associée à l'opération « * ».

Chacun des codes C_{i,*} ainsi calculés est enregistré dans le registres Rᵢ comme représenté sur la figure 7.

Avant l'exécution des instructions I₁ à I₇, l'opération 202 est exécutée une fois pour la donnée D₁ et une fois pour la donnée D₂. Dans le cas des instructions I₈ et I₉, il suffit que l'opération 202 soit exécutée une seule fois pour la donnée D₁ avant l'exécution de l'une des instructions I₈ et I₉.

Ensuite, à chaque fois qu'une instruction arithmétique et logique est sur le point d'être exécutée par l'unité 10, juste avant son exécution, lors d'une opération 204, le module 28 vérifie s'il existe une erreur dans la donnée contenue dans le registre Rᵢ identifié par un opérande de l'instruction Iⱼ à exécuter.

Lors de cette opération, pour chaque registre Rᵢ concerné, le module 28 vérifie, à l'aide du code EEC_{Di}, si la donnée Dᵢ actuellement enregistrée dans ce registre présente une erreur ou pas. Cette opération est, par exemple, réalisée comme décrit dans le cas de l'opération 170.

Si le module 28 détecte une erreur, il procède à l'étape 172 et, en parallèle, à une opération 206. Lors de l'opération 206, il corrige la donnée Dᵢ. L'opération 206 est par exemple réalisée de façon similaire à ce qui a été décrit pour l'opération 174.

Si le module 28 ne détecte aucune erreur ou à l'issue de l'opération 206, lors de l'étape 190, le microprocesseur 2 décode l'instruction Iⱼ puis l'unité 10 l'exécute et enregistre le résultat Dᵣₑₛ₋ₚ dans le registre Rᵣₑₛ.

En réponse, lors d'une opération 210, le module 28 calcule le code ECC_{D3} et tous les codes C_{3,*} à partir de la donnée Dᵣₑₛ₋ₚ enregistrée dans le registre Rᵣₑₛ et enregistre ces différents codes calculés dans le registre Rᵣₑₛ. Typiquement, le calcul des codes C_{3,*} est ici réalisé comme décrit pour l'opération 202.

Ensuite, lors d'une opération 212, le module 28 vérifie si un dysfonctionnement de l'unité 10 s'est produit lors de l'exécution de l'instruction arithmétique et logique.

Si l'instruction exécutée lors de l'étape 190 est l'une des instructions I₁ à I₇, alors le module 28 exécuté les sous-opérations suivantes.

Lors d'une sous-opération 214, le module 28 sélectionne, parmi les instructions I₁ à I₇, celle qui correspond à l'opération arithmétique exécutée. Dans les sous-opérations suivantes, le symbole « * » désigne l'instruction ainsi sélectionnée et F* la fonction préprogrammée qui lui est associée.

Lors d'une sous-opération 216, le module 28 sélectionne aussi, parmi les différents codes C_{3,*} enregistrés dans le registre Rᵣₑₛ, le seul code C_{3,*} qui correspond à l'instruction sélectionnée. Par la suite, le code C_{3,*} sélectionné lors de cette sous-opération est noté Cᵣₑₛ₋ₚ.

Puis, lors d'une sous-opération 218, le module 28 calcule aussi un code Cᵣₑₛ₋ₜ en combinant les codes C_{1,*} et C_{2,*} enregistrés, respectivement, dans les registres R₁ et R₂ préalablement à l'exécution de l'instruction arithmétique et logique. Plus précisément, le module 28 calcule le code Cᵣₑₛ₋ₜ à l'aide de la relation suivante : Cᵣₑₛ₋ₜ = C_{1,*}# C_{2,*}, où le symbole « # » désigne l'opération telle que F_{*}(D₁^{∗}D₂) = F_{*}(D₁) # F_{*}(D₂).

Par exemple, dans le cas de l'instruction I₁ et de la fonction parité p(..) précédemment décrite, l'opération « # » est l'opération « OU exclusif ». Dans ce cas, le code Cᵣₑₛ₋ₜ est le résultat du ou exclusif suivant C_{1,1} XOR C_{2,1}.

Enfin, lors d'une sous-opération 220, le module 28 compare les codes Cᵣₑₛ₋ₚ et Cᵣₑₛ₋ₜ calculés. Si ces codes sont différents, le module 28 déclenche l'exécution de l'étape 172. Dans le cas contraire, aucun signalement d'une faute d'exécution n'est déclenché et le procédé se poursuit par l'exécution de l'instruction suivante de la file 22.

L'exécution de ces sous-opérations 214 à 220 permet de détecter un dysfonctionnement de l'unité 10 car les codes calculés Cᵣₑₛ₋ₚ et Cᵣₑₛ₋ₜ sont identiques seulement si l'unité 10 a correctement exécuté l'opération « * ». Ceci s'explique par la relation suivante : Cᵣₑₛ₋ₚ = F_{*}(Dᵣₑₛ₋ₚ) = F_{*}(D₁^{∗}D₂) = F_{*}(D₁) # F_{*}(D₂) = C_{1,*}# C_{2,*} = Cᵣₑₛ₋ₜ.

Si l'instruction exécutée lors de l'étape 190 est l'une des instructions I₈ et I₉, alors lors d'une sous-opération 222, le module 28 sélectionne la fonction T* associée à cette instruction arithmétique et logique, c'est-à-dire la fonction T₈ s'il s'agit de l'instruction I₈, sinon la fonction T₉.

Lors d'une sous-opération 224, le module 28 sélectionne le code C_{1,*} associé à l'opération « * » exécutée lors de l'étape 190. Ce code sélectionné est noté Cᵣₑₛ₋ₜ.

Lors d'une sous-opération 226, le module 28 calcule un code Cᵣₑₛ₋ₚ à l'aide de la relation Cᵣₑₛ₋ₚ = T_{*}(Dᵣₑₛ₋ₚ) où T_{*} est la fonction sélectionnée lors de la sous-opération 222.

Après la sous-opération 224, le procédé se poursuit par la sous-opération 220.

Dans le cas des instructions I₈ et I₉, les codes Cᵣₑₛ₋ₚ et Cᵣₑₛ₋ₜ sont identiques uniquement si l'unité 10 a correctement fonctionné. Ceci se démontre à l'aide de la relation suivante : Cᵣₑₛ₋ₚ = T_{*}(Dᵣₑₛ₋ₚ) = T_{*}(F_{*}(D₁)) = F_{*}(D₁) = C_{1,*} = Cᵣₑₛ₋ₜ.

### CHAPITRE V : SÉCURISATION DES DONNÉES

Le code binaire 30, en plus du code machine 32, peut comporter des données à traiter lors de l'exécution du code machine 32. De plus, lors de l'exécution du code machine 32, celui-ci peut générer des données. Ces données sont typiquement contenues dans des blocs de données qui correspondent chacun à une plage prédéterminée d'adresses de la mémoire 4 dédiée au stockage de ces données. De tels blocs de données sont aussi connus sous le terme de « segment de données » ou de « page de données ».

Pour lire une donnée d'un bloc de données, le code machine 32 comporte une instruction de chargement qui, lorsqu'elle est exécutée par le microprocesseur 2, provoque le chargement d'une ligne de code LDⱼ située à l'adresse @ⱼ à l'intérieur de ce bloc de données. Dans ce cas, contrairement aux lignes de code LIⱼ décrites dans le chapitre III, la ligne LDⱼ code une donnée Dⱼ à traiter par le microprocesseur et non pas une instruction Iⱼ exécutable par l'unité 10.

Pour écrire une donnée dans un bloc de données, le code machine 32 comporte une instruction d'écriture qui, lorsqu'elle est exécutée par le microprocesseur 2, provoque l'écriture d'une ligne LDⱼ dans l'un des blocs de données.

De façon similaire à ce qui a été décrit dans le cas des instructions Iⱼ, une donnée Dⱼ peut être corrompue dans la mémoire 4 ou dans des registres du microprocesseur 2 par la mise en œuvre d'attaques telle qu'une attaque par injection de fautes. De plus, un attaquant peut aussi essayer de modifier le fonctionnement du code binaire 30 en déplaçant les données codées dans la mémoire 4 ou en les remplaçant par des données plus anciennes. Ainsi, il est aussi utile de sécuriser les données enregistrées dans la mémoire 4 ou dans des registres internes du microprocesseur.

À cet effet, chaque ligne de code LDⱼ codant une donnée présente la structure représentée sur la figure 9. La structure des lignes LDⱼ est pratiquement identique à celle des lignes LIⱼ codant des instructions. Plus précisément, la structure de la ligne LDⱼ est identique à la structure de la ligne LIⱼ sauf que le cryptogramme CIⱼ* est remplacé par un cryptogramme CDⱼ*. Étant donné que les codes MACⱼ et ECC_{Lj} de la ligne LDⱼ sont calculés comme déjà décrit dans le cas des lignes LIⱼ, ils sont ici désignés par les mêmes symboles et ne seront pas décrits à nouveau.

Le cryptogramme CDⱼ* est obtenu en chiffrant, avec la fonction fₖₐ, une concaténation CDⱼ. Ici, la fonction fₖₐ est la même que celle déjà décrite dans le cas des lignes LIⱼ. Ainsi, le cryptogramme CDⱼ* est obtenu à l'aide de la relation suivante : CDⱼ* = fₖₐ(CDⱼ ; ivⱼ). La fonction fₖₐ est préprogrammée dans le module 28.

La concaténation CDⱼ est la concaténation de la donnée Dⱼ et d'un code ECC_{Dj}. Le code ECC_{Dj} permet de détecter et de corriger une erreur dans la donnée Dⱼ. Il est typiquement construit comme décrit pour le code ECC_{Ij}.

Le cryptogramme CDⱼ* diffère du cryptogramme CIⱼ* en ce que le vecteur d'initialisation ivⱼ utilisé lors du chiffrement de la concaténation CDⱼ est fonction de l'adresse @ⱼ où est enregistrée la ligne LDⱼ. À cet effet, le module 28 comporte une fonction préprogrammée Fᵢᵥ qui, à chaque adresse @ⱼ de la mémoire 4 associe un vecteur d'initialisation ivⱼ différent. De préférence, la fonction Fᵢᵥ est telle qu'à deux adresses consécutives quelconque @ⱼ et @ⱼ₊₁, elle associe deux vecteurs différents, respectivement ivⱼ et ivⱼ₊₁, et l'écart entre les valeurs numériques de ces deux vecteurs ivⱼ et ivⱼ₊₁ varie en fonction de l'indice j. Par exemple, la fonction Fᵢᵥ est une fonction de hachage ou de chiffrement. On a donc la relation suivante : ivⱼ = Fᵢᵥ(@ⱼ).

La sécurisation des données Dⱼ va maintenant être décrite plus en détail en référence au procédé de la figure 10 et dans le cas particulier où elle est mise en œuvre en combinaison avec les enseignements des chapitres précédents. Plus précisément, la sécurisation des données Dⱼ intervient à chaque fois que l'instruction exécutée lors de l'étape 190 est une instruction de chargement ou d'écriture ou de traitement d'une donnée Dⱼ. Le procédé de la figure 10 représente les opérations exécutées lors de l'étape 250 pour sécuriser les données Dⱼ.

À chaque fois que lors de l'étape 190, l'unité 10 exécute une instruction qui conduit à enregistrer une nouvelle donnée Dⱼ dans un registre noté ici Rⱼ du microprocesseur 2, lors d'une opération 252, le module 28 calcule le code ECC_{Dj} à partir de la donnée Dⱼ. Ce code ECC_{Dj} calculé est ensuite concaténé avec la donnée Dⱼ dans le registre Rⱼ.

Ultérieurement, lors d'une nouvelle exécution de l'étape 190, l'unité 10 exécute une instruction d'enregistrement de la donnée Dⱼ contenue dans le registre Rⱼ à l'adresse @ⱼ de la mémoire 4.

En réponse, lors d'une opération 254, le module 28 construit la ligne de code LDⱼ qui doit être enregistrée à l'adresse @ⱼ à partir de la donnée Dⱼ. Pour cela, lors de cette opération, le module 28 :
- calcule un vecteur d'initialisation ivⱼ à l'aide de la relation ivⱼ = Fᵢᵥ(@ⱼ), puis
- chiffre la concaténation CDⱼ de la donnée Dⱼ et du code ECC_{Dj} à l'aide de la fonction fₖₐ et du vecteur d'initialisation ivⱼ calculé selon la relation suivante : CDⱼ* = fₖₐ(CDⱼ ; ivⱼ), puis
- calcule le code MACⱼ à partir du cryptogramme CDⱼ*, puis
- calcule le code ECC_{Lj} à partir du cryptogramme CDⱼ* et du code MACⱼ calculé.

Ensuite, la ligne LDⱼ construite est transférée et enregistrée dans la mémoire 4 à l'adresse @ⱼ.

L'adresse @ⱼ est située à l'intérieur d'un bloc prédéterminé de données BDₘ. Chaque bloc de données BDₘ est associé à un code EDCₘ qui permet de détecter une erreur si l'une des lignes de code contenues dans ce bloc BDₘ a été modifiée depuis la dernière mise à jour du code EDCₘ. Le code EDCₘ est donc un code détecteur d'erreur.

Le code EDCₘ peut être contenu dans la mémoire 4, par exemple à la fin du bloc de données BDₘ associé à ce code ou dans un registre du microprocesseur associé au bloc BDₘ.

Lors d'une opération 256, immédiatement après ou en parallèle de l'exécution de l'instruction d'écriture de la nouvelle ligne LDⱼ dans le bloc BDₘ, le code EDCₘ associé à ce bloc BDₘ est mis à jour puis enregistré. Ici, pour accélérer l'exécution de cette opération 256, le code EDCₘ est défini par la relation suivante : EDCₘ = MAC₁ XOR MAC₂ XOR ... XOR MACₘₘ, où :
- le symbole XOR désigne l'opération « OU exclusif »,
- les code MAC₁ à MACₘₘ sont les codes MACⱼ de toutes les lignes LDⱼ du bloc BDₘ, et
- mm est le nombre de lignes LDⱼ contenues dans le bloc BDₘ.

Lorsque le code EDCₘ est ainsi défini, l'opération 256 peut être réalisée à l'aide de la relation suivante : EDCₘ = EDCₘ XOR MAC_{jold} XOR MAC_{jnew}, où :
- les symboles EDCₘ à droite et à gauche du signe « = » désignent, respectivement, l'ancienne valeur du code EDCₘ avant l'enregistrement de la nouvelle ligne LDⱼ et la nouvelle valeur du code EDCₘ après l'enregistrement de cette nouvelle ligne LDⱼ,
- MAC_{jold} désigne le code MACⱼ de l'ancienne ligne LDⱼ qui est remplacée par la nouvelle ligne LDⱼ, et
- MAC_{jnew} désigne le code MACⱼ de la nouvelle ligne LDⱼ qui est enregistrée à l'adresse @ⱼ.

Ainsi, le nombre d'opérations à exécuter pour mettre à jour le code EDCₘ est limité.

L'opération 256 peut être réalisée par le module 28 ou par une unité de calcul incorporée dans la mémoire 4. De telles mémoires 4 incorporant une unité de calcul sont connues sous le terme anglais de « smart RAM » ou « In-memory computing ».

Si la prochaine instruction à exécuter lors de l'étape 190 est une instruction de chargement d'une ligne LDⱼ, alors, lors d'une opération 260, le module 28 vérifie, à l'aide du code EDCₘ, s'il existe une erreur dans le bloc BDₘ qui contient cette ligne LDⱼ.

Si le module 28 détecte qu'il existe une erreur, alors le procédé se poursuit par l'exécution de l'étape 172 et la ligne LDⱼ n'est pas chargée dans le microprocesseur 2.

Si le module 28 ne détecte aucune erreur, alors l'unité 10 exécute une instruction de chargement de la ligne LDⱼ et celle-ci est chargée dans un registre du microprocesseur 2. Typiquement, cette instruction de chargement comporte un opérande qui indique à quelle adresse @ⱼ se trouve la ligne LDⱼ à charger. Ici, lorsque l'unité 10 exécute cette instruction de chargement, elle charge la ligne LDⱼ dans un registre Rⱼ de l'ensemble 12 par exemple.

Ensuite, le module 28 exécute des opérations 270, 274, 276 et 278 identiques, respectivement, aux opérations 170, 174, 176 et 178 du procédé de la figure 6 sauf que ce sont les codes correspondants contenus dans la ligne LDⱼ qui sont utilisés et non pas ceux contenus dans une ligne LIⱼ.

De plus, lors de l'opération 278, le module 28 calcule le vecteur d'initialisation ivⱼ nécessaire pour déchiffrer le cryptogramme CDⱼ* à partir de l'adresse @ⱼ et à l'aide de la relation ivⱼ = Fᵢᵥ(@ⱼ).

Une fois que le cryptogramme CDⱼ* a été déchiffré, lors d'une opération 280, le module 28 enregistre la donnée Dⱼ déchiffrée et le code ECC_{Dj} déchiffré dans le registre Rⱼ en attendant que cette donnée soit traitée par l'unité 10.

Lorsque la prochaine instruction qui va être exécutée par l'unité 10 est une instruction qui traite la donnée Dⱼ, le module 28 procède à des opérations 284 et 286. Le module 28 identifie que la prochaine instruction à exécuter va traiter la donnée Dⱼ car cette instruction comporte généralement un opérande qui identifie le registre Rⱼ dans laquelle est enregistrée la donnée Dⱼ. Les opérations 284 et 286 sont, par exemple, identiques, respectivement, aux opérations 184 et 186 du procédé de la figure 6, sauf qu'ici, c'est la donnée Dⱼ et le code ECC_{Dj} qui sont utilisés et non pas l'instruction Iⱼ et le code ECC_{Ij}.

Ensuite, à l'issue de l'opération 286 ou si aucune erreur n'a été détectée lors de l'opération 284, l'unité 10 exécute l'instruction qui traite la donnée Dⱼ.

Le procédé de sécurisation des données décrit ici présente en outre les mêmes avantages que ceux présentés au chapitre III notamment à cause du fait que la structure de la ligne LDⱼ est pratiquement identique à celle de la ligne LIⱼ.

De plus, le fait de chiffrer la donnée Dⱼ à l'aide d'un vecteur d'initialisation ivⱼ qui dépend de l'adresse @ⱼ permet de détecter si une ligne LDⱼ a été déplacée à l'intérieur d'un bloc de données BDₘ. En effet, si deux lignes LD₁ et LD₂ d'un même bloc BDₘ sont permutées, cela ne modifie pas nécessairement le code EDCₘ et une telle permutation des lignes LD₁ et LD₂ n'est pas nécessairement détectée lors de l'opération 260. Par contre, puisque la donnée D₁ est chiffrée avec un vecteur d'initialisation iv₁ qui dépend de l'adresse @₁, si la ligne LD₁ est déplacée et se situe à une adresse @₂ dans la mémoire 4, lors du chargement de cette ligne à partir de cette adresse @₂, le cryptogramme CD₁* va être déchiffré à l'aide du vecteur d'initialisation iv₂ et non pas à l'aide du vecteur iv₁. Un tel déchiffrement incorrect de la donnée D₁ et du code ECC_{D1} est alors détecté lors de l'opération 284.

L'étape 250 décrite ici permet aussi de détecter une attaque consistant à remplacer une ligne LD₁ par une ligne LD_{1old} différente et précédemment enregistrée à la même adresse @₁. Un tel remplacement ne pourra pas être détecté lors de l'exécution de l'opération 284. Par contre, il sera détecté lors de l'exécution de l'opération 260 car les lignes LD₁ et LD_{1old} sont différentes.

La figure 11 représente un compilateur 300 apte à générer automatiquement le code binaire 30 à partir d'un code source 302. À cet effet, le compilateur 300 comporte typiquement un microprocesseur 304 programmable et une mémoire 306. La mémoire 306 contient les instructions et les données nécessaires pour, lorsqu'elles sont exécutées par le microprocesseur 304, générer automatiquement le code binaire 30 à partir du code source 302. En particulier, lors de la compilation du code source 302, le microprocesseur 304 génère automatiquement les vecteurs d'initialisation ivk appropriés et les lignes de code LIⱼ et LDⱼ. La conception et la réalisation d'un tel compilateur sont à la portée de l'homme du métier à partir des explications données dans cette description.

### Chapitre VI : VARIANTES :

### Variantes de l'appareil 1 :

La mémoire 4 peut aussi être une mémoire non volatile. Dans ce cas, il n'est pas nécessaire de copier le code binaire 30 à l'intérieur de cette mémoire avant le lancement de son exécution puisqu'il s'y trouve déjà.

En variante, la mémoire 4 peut aussi être une mémoire interne intégrée à l'intérieur du microprocesseur 2. Dans ce dernier cas, elle est réalisée sur le même substrat que les autres éléments du microprocesseur 2. Enfin, dans d'autres configurations, la mémoire 4 se compose de plusieurs mémoires dont certaines sont des mémoires internes et d'autres des mémoires externes.

La mémoire principale 4 peut comporter une première mémoire volatile de grande capacité et une seconde mémoire volatile de plus petite capacité mais dans laquelle les opérations de lecture et d'écriture sont plus rapides. La deuxième mémoire est connue sous le terme de « mémoire cache ». La mémoire cache peut être une mémoire externe au microprocesseur 2 ou une mémoire interne du microprocesseur 2. Dans certains modes de réalisation, plusieurs mémoires caches de niveaux différents peuvent être utilisées.

De nombreuses architectures matérielles différentes sont possibles pour réaliser le module 28. En particulier, le module 28 peut être composé par la combinaison de plusieurs blocs matériels du microprocesseur 2 remplissant des fonctions respectives et situés chacun dans une aire différente de la puce du microprocesseur 2.

### Variantes de la sécurisation du code machine :

En variante, certaines fonctions ou parties du code binaire 30 ne sont pas sécurisées. Pour gérer l'exécution d'un tel code binaire qui comporte à la fois une fonction sécurisée et des fonctions non-sécurisées, le jeu d'instructions du microprocesseur 2 peut être complété par :
- une instruction d'activation d'un mode sécurisé de fonctionnement du microprocesseur 2, et
- une instruction de désactivation de ce mode sécurisé.

Dans ce cas, l'instruction d'activation du mode sécurisé se trouve dans le code binaire 30 juste avant l'appel à la fonction sécurisée et l'instruction de désactivation du mode sécurisé se trouve juste après la fin de la fonction sécurisée. Lorsque l'instruction d'activation du mode sécurisé est chargée par le microprocesseur 2, en réponse, le module 28 commence à traiter les instructions et les données suivantes du code binaire comme décrit dans les chapitres précédents. Lorsque l'instruction de désactivation du mode sécurisé est chargée par le microprocesseur 2, en réponse, le module 28 est désactivé. Dans ce dernier cas, le traitement des instructions et des données suivantes du code binaire ne sont pas traitées par le module 28 mais directement chargées dans la file 22 ou dans les registres de l'ensemble 12.

En variante, une instruction « update » est ajoutée au jeu d'instructions du microprocesseur. Lorsque cette instruction « update » est exécutée par le microprocesseur 2, elle indique au module 28 qu'à partir de maintenant, le nouveau vecteur ivₖ précédemment chargé dans la mémoire 29 doit être utilisé pour déchiffrer les lignes de code LIⱼ. Dès lors, dans ce cas, l'utilisation d'un nouveau vecteur d'initialisation ivk peut être déclenchée autrement que par l'exécution d'une instruction de branchement. Dans ce cas, le procédé décrit peut aussi être mis en œuvre avec des instructions de branchement implicites. En effet, la dernière instruction qui se termine par une instruction de branchement implicite, est alors l'instruction « update ». Au lieu d'implémenter une instruction « update » en tant qu'instruction à part dans le jeu d'instructions du microprocesseur, il est possible d'ajouter un bit supplémentaire à chaque instruction du jeu d'instructions du microprocesseur 2 et de déclencher le changement de vecteur d'initialisation ivk uniquement lorsque ce bit supplémentaire prend une valeur spécifique.

### Variantes de la structure d'une ligne LIⱼ ou LDⱼ

En variante, la structure d'une ligne de code décrite en référence à la figure 2 ou 9 est mise en œuvre seulement pour les instructions Iⱼ ou seulement pour les données Dⱼ de la fonction sécurisée.

Le code ECC_{Ij} ou le code ECC_{Dj} peut être remplacé par un simple code détecteur d'erreur permettant seulement de détecter une erreur dans l'instruction Iⱼ ou la donnée Dⱼ avec laquelle il est concaténé. Un code détecteur d'erreur ne permet pas de corriger l'erreur détectée. Dans ce cas, l'opération 186 ou 286 de correction de l'erreur est omise. Dès lors, dès que le module 28 détecte une erreur dans une instruction Iⱼ déchiffré ou dans une donnée Dⱼ déchiffrée, par exemple, l'exécution de la fonction sécurisée est systématiquement interrompue.

Dans une variante simplifiée, le code ECC_{Ij} ou ECC_{Dj} est omis. Dans ce cas, le cryptogramme CIⱼ* ou CDⱼ* est seulement le cryptogramme de l'instruction Iⱼ ou de la donnée Dⱼ. Dans ce mode de réalisation, le microprocesseur 2 n'est plus capable de détecter une modification de l'instruction Iⱼ ou de la donnée Dⱼ qui interviendrait entre l'instant où celle-ci est enregistrée dans la file 22 ou un registre de l'ensemble 12 et l'instant où elle est exécutée ou traitée par l'unité 10.

Le code ECC_{Lj} peut être remplacé par un simple code détecteur d'erreur permettant seulement de détecter une erreur dans le cryptogramme CIⱼ* ou CDⱼ* et/ou le code MACⱼ contenus dans la même ligne de code. Dans ce cas, l'opération 174 ou 274 de correction est omise. Dès lors, dès que le module 28 détecte une erreur dans le cryptogramme CIⱼ* ou CDⱼ* ou dans le code MACⱼ, par exemple, l'exécution de la fonction sécurisée est interrompue.

Dans une autre variante, le code ECC_{Lj} est construit de manière à permettre seulement la détection d'une erreur, soit seulement dans le cryptogramme CIⱼ* ou CDⱼ* soit seulement dans le code MACⱼ.

Le code ECC_{Lj} peut être omis. Dans ce cas, une erreur dans le cryptogramme CIⱼ* ou CDⱼ* ou dans le code MACⱼ ne peut être détectée que lors de l'exécution de l'opération 176 ou 276 de vérification de l'intégrité et de l'authenticité du cryptogramme. La détection d'une erreur à l'aide d'un code MAC est généralement plus complexe qu'à l'aide d'un simple code détecteur d'erreur ou d'un simple code correcteur d'erreur. De plus, lorsque le code ECC_{Lj} est omis, dans le cas où il existe une erreur dans le cryptogramme CIⱼ* ou CDⱼ* ou le MACⱼ, il n'est pas possible de corriger cette erreur. Dans ce dernier cas, par exemple, l'exécution de la fonction sécurisée est donc systématiquement interrompue en cas d'erreur.

La fonction utilisée pour générer le cryptogramme CDⱼ* peut être différente de celle utilisée pour générer le cryptogramme CIⱼ*. Par exemple, ces deux fonctions diffèrent par le fait qu'elles utilisent des clés de chiffrement différentes.

### Variantes de la sécurisation de l'unité arithmétique et logique :

Le nombre de codes C_{i,*} calculés et associés à la donnée Dᵢ chargée n'est pas forcément égal au nombre total d'instructions arithmétiques et logiques différentes qui existent dans le jeu d'instructions du microprocesseur 2. Par exemple, le nombre de code C_{i,*} peut être réduit quand les mêmes codes C_{i,*} sont utilisés pour différentes instructions arithmétiques et logiques. Par exemple, le code C_{i,4} peut être omis si les fonctions F₃ et F₄ sont toutes les deux des fonctions logarithmiques. En effet, dans ce cas, lorsque l'instruction arithmétique et logique à exécuter est une multiplication, lors de l'opération 284, le module 28 calcule le code Cᵣₑₛ₋ₜ à l'aide de la relation suivante : Cᵣₑₛ₋ₜ = C_{1,3} + C_{2,3}. Pour vérifier que l'unité 10 a correctement réalisé une instruction arithmétique et logique de division, le module 28 peut calculer le code Cᵣₑₛ₋ₜ à l'aide de l'opération suivante : Cᵣₑₛ₋ₜ = C_{1,3} - C_{2,3}, où les codes C_{1,3} et C_{2,3} sont les même que ceux utilisés pour vérifier l'opération de multiplication. Dans ce cas, il n'est pas nécessaire de calculer les codes C_{1,4} et C_{2,4} puisqu'ils sont identiques, respectivement, aux codes C_{1,3} et C_{2,3}. Par contre, le code C_{3,4} doit être calculé à partir de la donnée Dᵣₑₛ₋ₚ. De façon similaire, il est possible de détecter le dysfonctionnement de l'unité 10 lors de l'exécution d'une instruction de soustraction en calculant le code Cᵣₑₛ₋ₜ à l'aide de la relation suivante : Cᵣₑₛ₋ₜ = C_{1,1} - C_{2,1} dans le cas où la fonction F₁ est aussi un homomorphisme pour l'ensemble B muni de l'opération de soustraction.

Dans un autre mode de réalisation, il est possible de détecter un dysfonctionnement de l'unité 10 uniquement lorsqu'elle exécute une seule ou un groupe restreint d'instructions arithmétiques et logiques du jeu d'instructions du microprocesseur 2. Dans ce cas, il existe des instructions arithmétiques et logiques pour lesquelles le microprocesseur ne vérifie pas si elles ont correctement été exécutées par l'unité 10. Cela permet de réduire le nombre de codes C_{i,*} utilisés.

En variante, le code C_{i,*} n'est pas enregistré dans le même registre Rᵢ que celui où est enregistrée la donnée Dᵢ mais dans un autre registre spécifiquement associé à ce registre Rᵢ.

### Variantes de la sécurisation des données :

La structure des lignes LDⱼ utilisée pour sécuriser les données peut être simplifiée. Par exemple, les codes MACⱼ et/ou ECC_{Lj} peuvent être omis.

Le code ECC_{Dj} peut être remplacé par un simple code détecteur d'erreur dans la donnée Dⱼ.

En variante, la fonction Fᵢᵥ est identique à la fonction fₖₐ sauf qu'elle est appliquée à l'adresse @ⱼ. La fonction Fᵢᵥ peut aussi utiliser le même algorithme de chiffrement que la fonction fₖₐ mais avec une clé de chiffrement différente de la clé ka.

Dans une variante simplifiée, la fonction Fᵢᵥ est la fonction identité. Dans ce cas, le vecteur d'initialisation ivⱼ est systématiquement égal à l'adresse @ⱼ.

Dans d'autres modes de réalisation, pour détecter un déplacement d'une ligne LDⱼ, le code MACⱼ est calculé en fonction du vecteur ivⱼ. Par exemple, le code MACⱼ est calculé à partir de la concaténation du cryptogramme CDⱼ* et du vecteur ivⱼ. Le code MACⱼ peut aussi être calculé à partir d'une combinaison du cryptogramme CDⱼ* et du vecteur ivⱼ telle que la combinaison suivante : CDⱼ* XOR ivⱼ. Dans le cas où le code MACⱼ dépend du vecteur ivⱼ, alors il peut être utilisé à la place du code ECC_{Dj} pour détecter une erreur en cas de déplacement de la ligne LDⱼ dans la mémoire 4. En effet, dans ce cas, lors de la vérification de l'intégrité et de l'authenticité du cryptogramme CDⱼ*, le module 28 :
- calcule le vecteur ivⱼ à l'aide de la relation ivⱼ = Fᵢᵥ(@ⱼ), puis
- combine le cryptogramme CDⱼ* lu à l'adresse @ⱼ avec le vecteur ivⱼ calculé, puis
- vérifie l'intégrité et l'authenticité de cette combinaison à partir du code MACⱼ contenu dans la même ligne LDⱼ.
Si cette ligne LDⱼ a été déplacée, le vecteur d'initialisation calculé est différent de celui attendu. Dès lors, l'intégrité de la combinaison du cryptogramme CDⱼ* et du vecteur d'initialisation ne peut pas être vérifiée, ce qui déclenche le signalement d'une faute d'exécution. On remarquera que dans ce mode de réalisation, il est possible de détecter un déplacement de la ligne LDⱼ sans même avoir à déchiffrer le cryptogramme CDⱼ*. Dans cette variante, pour détecter un déplacement de la ligne LDⱼ, les code ECC_{Dj} et ECC_{Lj} peuvent être omis.

De façon similaire à ce qui a été décrit ci-dessus pour le code MACⱼ, le code ECC_{LJ} peut aussi être construit de manière à dépendre du vecteur ivⱼ. Dans ce cas, le déplacement de la ligne LDⱼ est détecté lors de la vérifications du code ECC_{Lj}. Dès lors, pour détecter un déplacement de la ligne LDⱼ, les codes ECC_{Dj} et MACⱼ peuvent être omis.

L'étape 250 a été décrite dans le cas particulier de la sécurisation d'une donnée Dⱼ. Toutefois, en variante, la même étape peut être réalisée sur des lignes de code comportant une instruction Iⱼ à la place de la donnée Dⱼ. Dans ce cas, le cryptogramme CIⱼ* est obtenu en utilisant un vecteur d'initialisation ivⱼ et non pas le vecteur ivk comme décrit au chapitre III. Puisque le vecteur ivⱼ est fonction de l'adresse @ⱼ où est enregistrée cette ligne de code LIⱼ, il est alors possible de détecter le déplacement d'une ligne de code codant une instruction à exécuter. Dans ce cas, typiquement, le code ECC_{Ij} est utilisé pour détecter ce déplacement et non plus pour détecter une modification du flot de contrôle.

Dans les modes de réalisation décrits jusqu'à présent, à la fois la donnée Dⱼ et le code ECC_{Dj} sont codés en fonction du vecteur ivⱼ puisque le cryptogramme CDⱼ* est chiffré à l'aide de ce vecteur ivⱼ. En variante, soit seulement la donnée Dⱼ soit seulement le code ECC_{Dj} est codé en fonction du vecteur ivⱼ. Par exemple, dans la ligne de code, le cryptogramme de la donnée Dⱼ est obtenu à partir d'une fonction de chiffrement qui n'utilise pas le vecteur ivⱼ, tandis que le cryptogramme ECC_{DJ}* du code ECC_{Dj} est obtenu à l'aide de la fonction de chiffrement fₖₐ(ECC_{Dj} ; ivⱼ). Dans ce cas, lors de l'opération 278, le module 28 déchiffre le cryptogramme de la donnée Dⱼ sans utiliser le vecteur ivⱼ et déchiffre le cryptogramme ECC_{Dj}* en utilisant ce vecteur ivⱼ. Ensuite, le reste du procédé est identique à ce qui a déjà été décrit. Dans un mode de réalisation simplifiée, puisque la donnée Dⱼ n'a pas besoin d'être codée en fonction du vecteur ivⱼ, il est aussi possible de ne pas la chiffrer. Par exemple, la ligne de code contient alors la donnée Dⱼ en clair et le cryptogramme ECC_{Dj}*. Dès lors, lors de l'opération 278, le déchiffrement de la donnée Dⱼ est omis puisqu'il suffit de l'extraire de la plage de bits dans laquelle elle est contenue dans la ligne LDⱼ.

A l'inverse, il est aussi possible de modifier la structure des lignes LDⱼ de manière à ce que seule la donnée Dⱼ soit codée en fonction du vecteur ivⱼ. Par exemple, la ligne LDⱼ comporte un cryptogramme Dⱼ* de la donnée Dⱼ obtenue en la chiffrant à l'aide de la fonction fₖₐ(Dⱼ ; ivⱼ) et un cryptogramme ECC_{Dj}* obtenu en chiffrant le code ECC_{Dj} à l'aide d'une fonction de chiffrement indépendante du vecteur ivⱼ. Lors de l'opération 270, le module 28 déchiffre le cryptogramme Dⱼ* à l'aide du vecteur ivⱼ calculé et déchiffre le cryptogramme ECC_{Dj}* sans utiliser ce vecteur ivⱼ.

Jusqu'à présent, c'est une fonction de chiffrement qui a été décrite comme exemple de mode de réalisation permettant de coder la donnée Dⱼ ou le code ECC_{Dj} en fonction du vecteur ivⱼ. Cette fonction de chiffrement peut toutefois être aussi simple qu'une simple opération « OU » logique entre la donnée Dⱼ et le vecteur ivⱼ ou entre le code ECC_{Dj} et le vecteur ivⱼ.

Dans un autre mode de réalisation simplifié, le code ECC_{Dj} et le code MACⱼ sont omis. Dans ce cas, au moins l'un du cryptogramme Dⱼ* et du code ECC_{Lj} est construit en fonction du vecteur ivⱼ.

Pour la détection du déplacement de la ligne LDⱼ, il n'est pas nécessaire d'utiliser un code correcteur d'erreur. Un simple code détecteur d'erreur est suffisant. Ainsi, en variante, le ou les codes correcteurs d'erreur sont remplacés par des codes détecteurs d'erreur.

Dans un autre mode de réalisation, le code EDCₘ est omis. Dans ce cas, les opérations de traitement de ce code EDCₘ sont également omises, telles que les opérations 256 et 260.

Il est possible de construire le code EDCₘ différemment. Par exemple, en variante, le code EDCₘ est un code correcteur d'erreur qui permet en plus de corriger une erreur dans le bloc de données BDₘ. Dans ce cas, lorsqu'une erreur est détectée dans le bloc BDₘ, le code EDCₘ est utilisé pour corriger l'erreur détectée, puis le procédé se poursuit par l'opération 270.

D'autres méthodes de calcul du code EDCₘ sont possibles. Par exemple, en variante, le code EDCₘ est une somme de contrôles ou un code d'authentification de message.

Avantageusement le code EDCₘ est enregistré dans la mémoire 29.

### Autres variantes :

Dans une autre variante, les clés ka et k' sont les mêmes.

La clé ka peut être pré-enregistrée dans la mémoire 29. Dans ce cas, le cryptogramme ka* peut être omis du bloc 34.

Une ligne de code peut être plus longue qu'un mot-machine. Dans ce cas, chaque ligne de code se compose de plusieurs mots-machine généralement situés à des adresses mémoires immédiatement consécutives dans la mémoire 4. Dans ce cas, une ligne de code est chargée dans le microprocesseur 2 non pas en une seule opération de lecture, mais en exécutant plusieurs opérations de lecteur. Chaque opération de lecture charge dans le microprocesseur un mot-machine respectif de la ligne de code.

En variante, l'opération 176 ou 276 se poursuit systématiquement par l'opération 178 ou 278 même si l'intégrité ou l'authenticité du cryptogramme n'a pas pu être confirmée. Dans ce cas, l'opération 176 ou 276 sert à déclencher le signalement d'une faute d'exécution sans interrompre l'exécution du code binaire.

Tout ce qui a été décrit au chapitre III peut être mise en œuvre indépendamment de ce qui a été décrit dans les autres chapitres. Par exemple, les étapes 198 et 250 peuvent être omises.

Dans une autre variante, le procédé décrit au chapitre III pour détecter une erreur dans le flot de contrôle est mis en œuvre indépendamment de ce qui a été décrit dans les chapitres IV et V mais aussi indépendamment de certaines des caractéristiques du procédé décrit dans le chapitre III. En particulier, pour être capable de détecter une erreur dans le flot de contrôle, les codes ECC_{Lj} et MACⱼ peuvent être omis, ainsi que toutes les opérations de traitement de ces deux codes.

Tout ce qui a été décrit au chapitre IV peut être mis en œuvre indépendamment de ce qui a été décrit dans les autres chapitres. Par exemple, ce qui a été décrit au chapitre IV peut être mis en œuvre :
- sans que le code binaire soit chiffré,
- sans que le code MACⱼ soit compris dans chaque ligne de code,
- sans que les codes ECC_{Lj} et ECC_{Ij} ou ECC_{Dj} soient mis en œuvre,
- sans que les données Dⱼ soient chiffrées à l'aide du vecteur ivⱼ.

Tout ce qui a été décrit au chapitre V peut également être mis en œuvre indépendamment de ce qui a été décrit dans les autres chapitres. Par exemple, ce qui a été décrit au chapitre V peut être mis en œuvre :
- sans que les données Dⱼ soient chiffrées,
- en ne conservant qu'un seul code détecteur d'erreur choisi dans le groupe constitué des codes ECC_{Lj}, MACⱼ et ECC_{Dj}, et
- sans qu'un code C_{i,*} soit calculé à chaque chargement d'une donnée dans un registre.

Tous les modes de réalisation décrits dans ce texte et, en particulier, les différentes variantes, peuvent être combinés entre eux.

### CHAPITRE VII : AVANTAGES DES MODES DE RÉALISATION DÉCRITS :

### Avantage de la sécurisation du code binaire :

Le chiffrement des instructions Iⱼ ou des données Dⱼ permet de garantir la confidentialité du code binaire 30, ce qui rend le « Reverse Engineering » du code binaire très difficile. La vérification de l'intégrité du cryptogramme CIⱼ* ou CDⱼ* permet de détecter les modifications du code binaire provoquées, par exemple, par des attaques telles que l'injection de fautes dans la mémoire 4 ou le support 6. Le fait de vérifier l'authenticité des instructions et des données permet de détecter et de rendre très difficile l'ajout d'instructions supplémentaires dans le code binaire 30 par un attaquant, par exemple, pour y introduire des logiciels malveillants tels que des virus. En effet, même si l'attaquant connaît l'algorithme utilisé pour chiffrer les instructions Iⱼ ou les données Dⱼ, il ne connaît pas la clé secrète k' utilisée pour construire le code MACⱼ.

La vérification, à l'aide du code ECC_{Ij} ou ECC_{Dj}, de l'existence d'une erreur dans l'instruction Iⱼ ou la donnée Dⱼ juste avant qu'elle soit utilisée permet de détecter une modification de cette instruction ou de cette donnée Dⱼ alors qu'elle est stockée dans la file 22 ou un registre de l'ensemble 12. En effet, de telles modifications peuvent être provoquées par injection de fautes dans la file 22 ou les registres de l'ensemble 12. Ainsi, l'utilisation du code ECC_{Ij} ou ECC_{Dj} permet de détecter ce type d'attaque.

Le fait que le code ECC_{Ij} ou ECC_{Dj} soit un code correcteur d'erreur et pas seulement un code détecteur d'erreur, permet de rendre le procédé d'exécution plus robuste vis-à-vis des attaques par injection de fautes dans la file 22 ou dans les registres de l'ensemble 12. En effet, dans ce cas, le code correcteur d'erreur permet souvent de corriger l'erreur introduite dans l'instruction Iⱼ ou dans la donnée Dⱼ de sorte que malgré la présence de telles erreurs, la fonction sécurisée continue de s'exécuter correctement.

L'utilisation du code ECC_{Lj} permet de détecter plus rapidement une erreur dans le cryptogramme CIⱼ* ou CDⱼ* ou dans le code MACⱼ que si seul le code MACⱼ était utilisé pour cela. L'utilisation du code ECC_{Lj} permet donc d'accélérer l'exécution du code binaire.

L'utilisation d'un code correcteur d'erreur pour le code ECC_{Lj} permet de rendre le procédé revendiqué plus robuste vis-à-vis des attaques par injection de fautes dans la mémoire 4 ou dans le support 6. En effet, dans ce cas, le code correcteur d'erreur permet souvent de corriger le cryptogramme CIⱼ* ou CDⱼ* ou le code MACⱼ de sorte que malgré la présence de telles erreurs, la fonction sécurisée s'exécute correctement.

Le fait d'utiliser des clés secrètes différentes pour déchiffrer le cryptogramme CIⱼ* ou CDⱼ* et pour vérifier l'intégrité et l'authenticité du code MACⱼ permet d'accroître la sécurité du procédé.

Lors de l'exécution d'un bloc de base précédent, le fait de charger dans le microprocesseur le vecteur d'initialisation ivk nécessaire au déchiffrement du bloc de base BBₖ suivant permet de déclencher le signalement d'une faute d'exécution si un attaquant essaie de modifier l'ordre dans lequel les blocs de base du code machine 32 doivent normalement être exécutés. Plus précisément, une telle modification du flot de contrôle sera détectée grâce au code ECC_{Ij} lors de l'opération 184.

L'enregistrement dans un registre du microprocesseur du vecteur d'initialisation ivₖ à utiliser pour déchiffrer le bloc de base exécuté après l'exécution d'une sous-fonction sécurisée permet d'appeler cette sous-fonction sécurisée depuis différents blocs de base du code machine 32 de la fonction sécurisée. En effet, dans ce cas, il n'est pas possible de coder le vecteur ivk à utiliser dans le dernier bloc de base de la sous-fonction sécurisée puisque le bloc de base suivant n'est pas toujours le même et n'est donc pas toujours chiffré à l'aide du même vecteur ivk.

La vérification de l'authenticité de la clé d'application ka à partir de différents certificats cryptographiques dont au moins un est enregistré dans la mémoire sécurisée du microprocesseur permet de garantir que le code binaire 30 a été généré par un auteur autorisé à faire cela et non pas par un tiers qui n'a pas le droit de générer de tel code binaire pour le microprocesseur 2.

### Avantages de la sécurisation de l'unité arithmétique et logique :

Lorsque des fautes sont injectées dans l'unité 10, le résultat Dᵣₑₛ₋ₚ obtenu à l'issue de l'exécution de l'opération arithmétique et logique peut être différent du résultat théorique Dᵣₑₛ₋ₜ attendu. Le procédé revendiqué permet de détecter un tel dysfonctionnement de l'unité 10 sans, par exemple, avoir à exécuter plusieurs fois l'opération arithmétique et logique défaillante.

### Avantages de la sécurisation des données :

Dans le procédé revendiqué, si un attaquant déplace une ligne LDⱼ, une erreur est alors détectée à l'aide d'un code détecteur d'erreur. Grâce à cela, il est donc beaucoup plus difficile de mettre en œuvre une attaque dans laquelle les lignes de code sont déplacées sans que cette attaque soit détectée.

De plus, le procédé revendiqué est rapide. En effet, la donnée Dⱼ et le code détecteur d'erreur associé à cette donnée Dⱼ sont enregistrés à la même adresse @ⱼ. Par conséquent, il suffit d'une seule opération de lecture pour lire à la fois la donnée et son code détecteur d'erreur. A l'inverse, si ces informations étaient enregistrées à des adresses différentes, il faudrait plusieurs opérations de lecture pour détecter une erreur ce qui ralentirait l'exécution du procédé.

L'utilisation du code détecteur d'erreur EDCₘ permet de détecter une attaque qui consiste à remplacer une ligne de code située à une adresse @ⱼ par une autre ligne de code qui était précédemment enregistrée à la même adresse @ⱼ. En effet, un tel remplacement ne peut pas toujours être détecté en absence de ce code EDCₘ.

Le fait de construire le code EDCₘ uniquement à partir des codes MACⱼ des lignes LDⱼ accélère le calcul de ce code EDCₘ car les codes MACⱼ sont généralement beaucoup plus courts que la ligne de code complète. De plus, cette accélération du calcul est obtenue sans modifier la fiabilité de la détection d'erreur car le code MACⱼ dépend de la donnée Dⱼ.

L'utilisation d'un « OU exclusif » pour mettre à jour le code EDCₘ permet une mise à jour de ce code de manière itérative, ce qui est bien plus rapide que de calculer, à chaque écriture d'une nouvelle ligne de code, le nouveau code EDCₘ à partir du contenu de chacune des lignes contenues dans le bloc BDₘ.

Utiliser un code correcteur d'erreur en tant que code ECC_{Dj} permet, en plus, de corriger une erreur détectée. Cela permet donc de poursuivre l'exécution de la fonction sécurisée même si une erreur a été signalée.

Enregistrer le code EDCₘ dans la mémoire 29 accroît la sécurité du procédé car cette mémoire est très difficilement modifiable par un attaquant.

Le fait de coder à la fois la donnée Dⱼ et le code ECC_{Dj} en le chiffrant à l'aide d'une fonction de chiffrement paramétrée par le vecteur ivⱼ permet d'accroître la sécurité du procédé. En effet, en plus, la confidentialité de la donnée Dⱼ et du code ECC_{Dj} est assurée.

Le fait d'utiliser en tant que code détecteur d'erreur un code capable de détecter une erreur dans le cryptogramme CDⱼ* permet de détecter un déplacement d'une ligne de code sans même avoir à déchiffrer ce cryptogramme CDⱼ*.

## Revendications

1. Procédé d'exécution d'un code binaire d'une fonction sécurisée par un microprocesseur, **caractérisé en ce que** ce procédé comporte :
a) l'enregistrement (150) dans une mémoire principale à une adresse @ⱼ d'une ligne de code, chaque ligne de code correspondant à un mot-machine transférable en un seul cycle d'horloge depuis la mémoire principale jusque dans un registre du microprocesseur, cette ligne de code contenant :
- une donnée Dⱼ à traiter par le microprocesseur ou un cryptogramme de cette donnée Dⱼ, et
- un premier code détecteur d'erreur (ECC_{Dj}, MACⱼ, ECC_{Lj}) permettant de détecter une erreur dans la donnée Dⱼ ou dans son cryptogramme si cette donnée Dⱼ ou son cryptogramme est modifié après son enregistrement dans la mémoire principale,
au moins l'un de la donnée Dⱼ, de son cryptogramme et du premier code détecteur d'erreur étant chiffré en fonction d'un vecteur d'initialisation ivⱼ, ce vecteur d'initialisation ivⱼ variant en fonction de l'adresse @ⱼ à laquelle la ligne de code est enregistrée selon une relation ivⱼ = Fᵢᵥ(@ⱼ), où la fonction Fᵢᵥ est une fonction préprogrammée d'un module matériel de sécurisation du microprocesseur qui associe un vecteur d'initialisation ivⱼ différent à chaque adresse @ⱼ différente de la mémoire principale,
b) lors de l'exécution (152) du code binaire par le microprocesseur, le procédé comporte les opérations suivantes :
1) l'exécution d'une instruction de chargement par le microprocesseur qui provoque le chargement dans les registres du microprocesseur de la ligne de code enregistrée à l'adresse @ⱼ, puis
2) le module matériel de sécurisation calcule (278) le vecteur d'initialisation ivⱼ à l'aide de la relation ivⱼ = Fᵢᵥ(@ⱼ), où @ⱼ est l'adresse à partir de laquelle la ligne de code a été chargée, puis
3) le module matériel de sécurisation déchiffre (278) la ligne de code chargée à l'aide du vecteur d'initialisation ivⱼ calculé pour obtenir :
- la donnée Dⱼ ou son cryptogramme, et
- le premier code détecteur d'erreur, puis
4) le module matériel de sécurisation vérifie (284), à l'aide du premier code détecteur d'erreur obtenu, s'il existe une erreur dans la donnée Dⱼ ou son cryptogramme et, si une telle erreur existe, déclenche (172) le signalement d'une faute d'exécution et, si une telle erreur n'existe pas, inhibe ce signalement d'une faute d'exécution.

2. Procédé selon la revendication 1, dans lequel :
- lors de l'étape a), le procédé comporte :
- la mise à jour (256) d'un second code détecteur d'erreur (EDCₘ) en fonction de la ligne de code enregistrée à l'adresse @ⱼ, ce second code détecteur d'erreur permettant de détecter une erreur si une ligne de code quelconque, contenue dans un bloc (BDₘ) de plusieurs lignes de code enregistrées dans une plage prédéterminée d'adresses de la mémoire principale, est modifiée après la mise à jour de ce second code détecteur d'erreur, la plage prédéterminée d'adresses comportant l'adresse @ⱼ, et
- l'enregistrement (256) du second code détecteur d'erreur mis à jour,
- juste avant ou après l'opération 1), le module matériel de sécurisation vérifie (260), à l'aide du second code détecteur d'erreur mis à jour lors de l'étape a), s'il existe une erreur dans le bloc de données contenant la ligne de code enregistrée à l'adresse @ⱼ, et, si une telle erreur existe, déclenche (172) le signalement d'une faute d'exécution et, si une telle erreur n'existe pas, inhibe ce signalement d'une faute d'exécution.

3. Procédé selon la revendication 2, dans lequel lors de l'étape a) :
- chaque ligne de code du bloc de données contient, en plus d'une donnée ou de son cryptogramme, un code d'authentification de message (MACⱼ) permettant de vérifier l'intégrité et l'authenticité de la donnée ou du cryptogramme contenu dans cette ligne, et
- le second code détecteur d'erreur est mis à jour (256) uniquement à l'aide des codes d'authentification de message des lignes de code contenues dans ce bloc de données.

4. Procédé selon la revendication 3, dans lequel :
- lors de l'opération a), le second code détecteur d'erreur est mis à jour à l'aide de la relation suivante : EDCₘ = EDCₘ XOR MAC_{jold} XOR MAC_{jnew}, où :
- les symboles EDCₘ à droite et à gauche du symbole « = » sont, respectivement, la précédente valeur et la valeur mise à jour du second code détecteur d'erreur,
- le symbole XOR est l'opération « OU exclusif », et
- les symboles MAC_{jold} et MAC_{jnew} sont les valeurs des codes d'authentification de message, respectivement, de l'ancienne et de la nouvelle lignes de code enregistrée à l'adresse @ⱼ.

5. Procédé selon l'une quelconque des revendications 2 à 4, dans lequel le second code détecteur d'erreur mis à jour est enregistré dans une mémoire sécurisée du module matériel de sécurisation, cette mémoire sécurisée étant seulement accessible par le module matériel de sécurisation.

6. Procédé selon l'une quelconque des revendications précédentes, dans lequel :
- lors de l'étape a), le premier code détecteur d'erreur est un code correcteur d'erreur qui permet en plus de corriger une erreur dans la donnée Dⱼ ou dans son cryptogramme,
- lors de l'opération 4), si une erreur existe, alors le module matériel de sécurisation corrige (286) la donnée Dⱼ ou son cryptogramme à l'aide du code correcteur d'erreur puis, le microprocesseur traite la donnée Dⱼ corrigée ou son cryptogramme corrigé.

7. Procédé selon l'une quelconque des revendications précédentes, dans lequel lors de l'étape a) :
- la ligne de code contient un cryptogramme CDⱼ* d'une concaténation CDⱼ de la donnée Dⱼ et du premier code détecteur d'erreur, ce cryptogramme CDⱼ* étant obtenu à l'aide d'une relation CDⱼ* = fₖₐ(CDⱼ ; ivⱼ), où la fonction fₖₐ est une fonction prédéterminée de chiffrement correspondant à une fonction fₖₐ⁻¹ de déchiffrement préprogrammé dans le module matériel de sécurisation, le cryptogramme CDⱼ* codant ainsi la donnée Dⱼ et le premier code détecteur d'erreur en fonction du vecteur d'initialisation ivⱼ,
- lors de l'opération 3), le déchiffrement (278) de la ligne de code par le module matériel de sécurisation comporte le déchiffrement du cryptogramme CDⱼ* à l'aide de la relation CDⱼ = fₖₐ⁻¹(CDⱼ* ; ivⱼ) pour obtenir la donnée Dⱼ déchiffrée et le premier code détecteur d'erreur déchiffré.

8. Procédé selon l'une quelconque des revendications précédentes, dans lequel :
- lors de l'étape a), la ligne de code contient un cryptogramme CDⱼ* construit à partir de la donnée Dⱼ et le premier code détecteur d'erreur permet de détecter une erreur dans le cryptogramme CDⱼ*, ce premier code détecteur d'erreur ou le cryptogramme CDⱼ* étant chiffré fonction du vecteur d'initialisation ivⱼ,
- lors de l'opération 3), le déchiffrement de la ligne de code par le module matériel de sécurisation comporte le déchiffrement, à l'aide du vecteur d'initialisation ivⱼ calculé, du cryptogramme CDⱼ* ou du premier code détecteur d'erreur chiffré en fonction du vecteur d'initialisation ivⱼ.

9. Code binaire d'une fonction sécurisée exécutable par un microprocesseur pour la mise en œuvre d'un procédé d'exécution conforme à l'une quelconque des revendications précédentes, ce code binaire étant enregistré dans une mémoire principale lisible par le microprocesseur et correspondant à une ensemble de plusieurs lignes de code, chaque ligne de code correspondant à un mot-machine transférable en un seul cycle d'horloge depuis la mémoire principale jusque dans un registre du microprocesseur, **caractérisé en ce que** le code binaire comprend une ligne de code contenant :
- une donnée Dⱼ à traiter par le microprocesseur ou un cryptogramme de cette donnée Dⱼ, et
- un premier code détecteur d'erreur (ECC_{Dj}, MACⱼ, ECC_{Lj}) permettant de détecter une erreur dans la donnée Dⱼ ou dans son cryptogramme si cette donnée Dⱼ ou son cryptogramme est modifié après son enregistrement dans la mémoire principale,
au moins l'un de la donnée Dⱼ, de son cryptogramme et du premier code détecteur d'erreur étant chiffré en fonction d'un vecteur d'initialisation ivⱼ, ce vecteur d'initialisation ivⱼ variant en fonction de l'adresse @ⱼ à laquelle la ligne de code est enregistrée dans la mémoire principale selon une relation ivⱼ = Fᵢᵥ(@ⱼ), où la fonction Fᵢᵥ est une fonction qui associe un vecteur d'initialisation ivⱼ différent à chaque adresse @ⱼ différente de la mémoire principale.

10. Support d'enregistrement d'informations lisible par un microprocesseur, **caractérisé en ce qu'**il comporte un code binaire conforme à la revendication 9.

11. Microprocesseur (2) pour la mise en œuvre d'un procédé conforme à l'une quelconque des revendications 1 à 8, ce microprocesseur comportant :
- une unité arithmétique et logique (10) apte à exécuter l'opération 1) du procédé conforme à la revendication 1, et
- un module matériel (28) de sécurisation,
**caractérisé en ce que** le module matériel (28) de sécurisation est configuré pour exécuter les opérations 2) et 4) du procédé conforme à la revendication 1.

12. Compilateur (300) apte à transformer automatiquement un code source d'une fonction sécurisée en un code binaire de cette fonction sécurisée, **caractérisé en ce que** le compilateur est apte à transformer automatiquement le code source en un code binaire conforme à revendication 9.

## Patentansprüche

1. Verfahren zur Ausführung eines Binärcodes einer durch einen Mikroprozessor gesicherten Funktion, **dadurch gekennzeichnet, dass** dieses Verfahren Folgendes umfasst:
a) Aufzeichnen (150), in einem Hauptspeicher unter einer Adresse @ⱼ, einer Codezeile, wobei jede Codezeile einem Maschinenwort entspricht, das in einem einzigen Taktzyklus von dem Hauptspeicher in ein Register des Mikroprozessors übertragen werden kann, wobei diese Codezeile Folgendes enthält:
- ein Datenelement Dⱼ, das durch den Mikroprozessor zu verarbeiten ist, oder ein Kryptogramm dieses Datenelements Dⱼ und
- einen ersten Fehlererkennungscode (ECC_{Dj}, MACⱼ, ECC_{Lj}), der es gestattet, einen Fehler in dem Datenelement Dⱼ oder in seinem Kryptogramm zu erkennen, falls dieses Datenelement Dⱼ oder sein Kryptogramm nach seiner Aufzeichnung in dem Hauptspeicher modifiziert wird,
wobei mindestens eines von dem Datenelement Dⱼ, seinem Kryptogramm und dem ersten Fehlererkennungscode in Abhängigkeit von einem Initialisierungsvektor ivⱼ verschlüsselt ist, wobei dieser Initialisierungsvektor ivⱼ in Abhängigkeit von der Adresse @ⱼ, unter der die Codezeile aufgezeichnet ist, gemäß einer Beziehung ivⱼ = Fᵢᵥ(@ⱼ) variiert, wobei die Funktion Fᵢᵥ eine vorprogrammierte Funktion eines Hardware-Sicherungsmoduls des Mikroprozessors ist, die jeder unterschiedlichen Adresse @ⱼ des Hauptspeichers einen unterschiedlichen Initialisierungsvektor ivⱼ zuordnet,
b) wobei während der Ausführung (152) des Binärcodes durch den Mikroprozessor das Verfahren die folgenden Operationen umfasst:
1) Ausführen einer Ladeanweisung durch den Mikroprozessor, die bewirkt, dass die unter der Adresse @ⱼ aufgezeichnete Codezeile in die Register des Mikroprozessors geladen wird, dann
2) Berechnen (278), durch das Hardware-Sicherungsmodul, des Initialisierungsvektors ivⱼ mit Hilfe der Beziehung ivⱼ = Fᵢᵥ (@ⱼ), wobei @ⱼ die Adresse ist, von der aus die Codezeile geladen wurde, dann
3) Entschlüsseln (278), durch das Hardware-Sicherungsmodul, der geladenen Codezeile mit Hilfe des berechneten Initialisierungsvektors ivⱼ, um Folgendes zu erhalten:
- das Datenelement Dⱼ oder sein Kryptogramm und
- den ersten Fehlererkennungscode, dann
4) Überprüfen (284), durch das Hardware-Sicherungsmodul und mit Hilfe des erhaltenen ersten Fehlererkennungscodes, ob es einen Fehler in dem Datenelement Dⱼ oder seinem Kryptogramm gibt, und falls es einen solchen Fehler gibt, Auslösen (172) der Meldung eines Ausführungsfehlers, und falls es einen solchen Fehler nicht gibt, Verhindern dieser Meldung eines Ausführungsfehlers.

2. Verfahren nach Anspruch 1, wobei:
- das Verfahren während des Schritts a) Folgendes umfasst:
- Aktualisieren (256) eines zweiten Fehlererkennungscodes (EDCₘ) in Abhängigkeit von der unter der Adresse @ⱼ aufgezeichneten Codezeile, wobei dieser zweite Fehlererkennungscode es gestattet, einen Fehler zu erkennen, falls irgendeine Codezeile, die in einem Block (BDₘ) mit mehreren Codezeilen, die in einem vorgegebenen Adressbereich des Hauptspeichers aufgezeichnet sind, enthalten ist, nach dem Aktualisieren dieses zweiten Fehlererkennungscodes modifiziert wird, wobei der vorgegebene Adressbereich die Adresse @ⱼ umfasst, und
- Aufzeichnen (256) des aktualisierten zweiten Fehlererkennungscodes,
- direkt vor oder nach Operation 1), Überprüfen (260), durch das Hardware-Sicherungsmodul und mit Hilfe des während des Schritts a) aktualisierten zweiten Fehlererkennungscodes, ob es in dem Datenblock, der die unter der Adresse @ⱼ aufgezeichnete Codezeile enthält, einen Fehler gibt, und falls es einen solchen Fehler gibt, Auslösen (172) der Meldung eines Ausführungsfehlers, und falls es einen solchen Fehler nicht gibt, Verhindern dieser Meldung eines Ausführungsfehlers.

3. Verfahren nach Anspruch 2, wobei während des Schritts a):
- jede Codezeile des Datenblocks zusätzlich zu einem Datenelement oder seinem Kryptogramm einen Nachrichtenauthentifizierungscode (MACⱼ) enthält, der es gestattet, die Integrität und die Authentizität des in dieser Zeile enthaltenen Datenelements oder Kryptogramms zu überprüfen, und
- der zweite Fehlererkennungscode nur mit Hilfe der Nachrichtenauthentifizierungscodes der in diesem Datenblock enthaltenen Codezeilen aktualisiert (256) wird.

4. Verfahren nach Anspruch 3, wobei:
- während der Operation a) der zweite Fehlererkennungscode mit Hilfe der folgenden Beziehung aktualisiert wird: EDCₘ = EDCₘ XOR MAC_{jold} XOR MAC_{jnew}, wobei:
- die Zeichen EDCₘ rechts und links des Zeichens "=" jeweils der frühere Wert und der aktualisierte Wert des zweiten Fehlererkennungscodes sind,
- das Zeichen XOR die "Exklusiv-ODER"-Operation ist und
- die Zeichen MAC_{jold} und MAC_{jnew} die Werte der Nachrichtenauthentifizierungscodes der alten bzw. der neuen unter der Adresse @ⱼ aufgezeichneten Codezeile sind.

5. Verfahren nach einem der Ansprüche 2 bis 4, wobei der aktualisierte zweite Fehlererkennungscode in einem gesicherten Speicher des Hardware-Sicherungsmoduls aufgezeichnet wird, wobei nur das Hardware-Sicherungsmodul auf diesen gesicherten Speicher zugreifen kann.

6. Verfahren nach einem der vorhergehenden Ansprüche, wobei:
- während des Schritts a) der erste Fehlererkennungscode ein Fehlerkorrekturcode ist, der es zusätzlich gestattet, einen Fehler in dem Datenelement Dⱼ oder in seinem Kryptogramm zu korrigieren,
- während der Operation 4), falls es einen Fehler gibt, das Hardware-Sicherungsmodul das Datenelement Dⱼ oder sein Kryptogramm mit Hilfe des Fehlerkorrekturcodes korrigiert (286) und dann der Mikroprozessor das korrigierte Datenelement Dⱼ oder sein korrigiertes Kryptogramm verarbeitet.

7. Verfahren nach einem der vorhergehenden Ansprüche, wobei während des Schritts a):
- die Codezeile ein Kryptogramm CDⱼ* einer Verkettung CDⱼ des Datenelements Dⱼ und des ersten Fehlererkennungscodes enthält, wobei dieses Kryptogramm CDⱼ* mit Hilfe einer Beziehung CDⱼ* = fₖₐ(CDⱼ; ivⱼ) erhalten wird, wobei die Funktion fₖₐ eine vorgegebene Verschlüsselungsfunktion ist, die einer vorprogrammierten Entschlüsselungsfunktion fkₐ⁻¹ in dem Hardware-Sicherungsmodul entspricht, sodass das Kryptogramm CDⱼ* auf diese Art und Weise das Datenelement Dⱼ und den ersten Fehlererkennungscode in Abhängigkeit von dem Initialisierungsvektor ivⱼ codiert,
- während der Operation 3) das Entschlüsseln (278) der Codezeile durch das Hardware-Sicherungsmodul das Entschlüsseln des Kryptogramms CDⱼ* mit Hilfe der Beziehung CDⱼ = fₖₐ⁻¹(CDⱼ*; ivⱼ) umfasst, um das entschlüsselte Datenelement Dⱼ und den entschlüsselten ersten Fehlererkennungscode zu erhalten.

8. Verfahren nach einem der vorhergehenden Ansprüche, wobei:
- während des Schritts a) die Codezeile ein Kryptogramm CDⱼ* enthält, das anhand des Datenelements Dⱼ erzeugt wurde, und der erste Fehlererkennungscode es gestattet, einen Fehler in dem Kryptogramm CDⱼ* zu erkennen, wobei dieser erste Fehlererkennungscode oder das Kryptogramm CDⱼ* in Abhängigkeit von dem Initialisierungsvektor ivⱼ verschlüsselt sind,
- während der Operation 3) das Entschlüsseln der Codezeile durch das Hardware-Sicherungsmodul das Entschlüsseln, mit Hilfe des berechneten Initialisierungsvektors ivⱼ, des Kryptogramms CDⱼ* oder des ersten Fehlererkennungscodes, die in Abhängigkeit von dem Initialisierungsvektor ivⱼ verschlüsselt sind, umfasst.

9. Binärcode einer gesicherten Funktion, der für die Umsetzung eines Ausführungsverfahrens nach einem der vorhergehenden Ansprüche durch einen Mikroprozessor ausgeführt werden kann, wobei dieser Binärcode in einem Hauptspeicher, der für den Mikroprozessor lesbar ist, aufgezeichnet ist und einem Satz mehrerer Codezeilen entspricht, wobei jede Codezeile einem Maschinenwort entspricht, das in einem einzelnen Taktzyklus von dem Hauptspeicher in ein Register des Mikroprozessors übertragen werden kann, **dadurch gekennzeichnet, dass** der Binärcode eine Codezeile beinhaltet, die Folgendes enthält:
- ein Datenelement Dⱼ, das durch den Mikroprozessor zu verarbeiten ist, oder ein Kryptogramm dieses Datenelements Dⱼ und
- einen ersten Fehlererkennungscode (ECC_{Dj}, MACⱼ, ECC_{Lj}), der es gestattet, einen Fehler in dem Datenelement Dⱼ oder in seinem Kryptogramm zu erkennen, falls dieses Datenelement Dⱼ oder sein Kryptogramm nach seiner Aufzeichnung in dem Hauptspeicher modifiziert wird,
wobei mindestens eines von dem Datenelement Dⱼ, seinem Kryptogramm und dem ersten Fehlererkennungscode in Abhängigkeit von einem Initialisierungsvektor ivⱼ verschlüsselt ist, wobei dieser Initialisierungsvektor ivⱼ in Abhängigkeit von der Adresse @ⱼ, unter der die Codezeile in dem Hauptspeicher aufgezeichnet ist, gemäß einer Beziehung ivⱼ = Fᵢᵥ(@ⱼ) variiert, wobei die Funktion Fᵢᵥ eine Funktion ist, die jeder unterschiedlichen Adresse @ⱼ des Hauptspeichers einen unterschiedlichen Initialisierungsvektor ivⱼ zuordnet.

10. Medium zur Aufzeichnung von Informationen, das für einen Mikroprozessor lesbar ist, **dadurch gekennzeichnet, dass** es einen Binärcode nach Anspruch 9 umfasst.

11. Mikroprozessor (2) für die Umsetzung eines Verfahrens nach einem der Ansprüche 1 bis 8, wobei dieser Mikroprozessor Folgendes umfasst:
- eine arithmetisch-logische Einheit (10), die fähig ist, die Operation 1) des Verfahrens nach Anspruch 1 auszuführen, und
- ein Hardware-Sicherungsmodul (28),
**dadurch gekennzeichnet, dass** das Hardware-Sicherungsmodul (28) dazu konfiguriert ist, die Operationen 2) und 4) des Verfahrens nach Anspruch 1 auszuführen.

12. Compiler (300), der fähig ist, einen Quellcode einer gesicherten Funktion automatisch in einen Binärcode dieser gesicherten Funktion umzuwandeln, **dadurch gekennzeichnet, dass** dieser Compiler fähig ist, den Quellecode in einen Binärcode nach Anspruch 9 umzuwandeln.

## Claims

1. Method of execution of a binary code of a secure function by a microprocessor, **characterized in that** this method comprises:
a) the recording (150) in a main memory at an address @ⱼ of a code line, each code line corresponding to a machine word which can be transferred in a single clock cycle from the main memory into a register of the microprocessor, this code line containing:
- a datum Dⱼ to be processed by the microprocessor or a cryptogram of this datum Dⱼ, and
- a first error-detecting code (ECC_{Dj}, MACⱼ, ECC_{Lj}) making it possible to detect an error in the datum Dⱼ or in its cryptogram if this datum Dⱼ or its cryptogram is modified after its recording in the main memory,
at least one of the datum Dⱼ, of its cryptogram and of the first error-detecting code being encrypted as a function of an initialization vector ivⱼ, this initialization vector ivⱼ varying as a function of the address @ⱼ at which the code line is recorded according to a relation ivⱼ = Fᵢᵥ(@ⱼ), where the function Fᵢᵥ is a preprogrammed function of a securing hardware module of the microprocessor which associates a different initialization vector ivⱼ with each different address @ⱼ of the main memory,
b) during the execution (152) of the binary code by the microprocessor, the method comprises the following operations:
1) the execution of a loading instruction by the microprocessor which causes the loading into the registers of the microprocessor of the code line recorded at the address @ⱼ, and then
2) the securing hardware module calculates (278) the initialization vector ivⱼ with the aid of the relation ivⱼ = Fᵢᵥ(@ⱼ), where @ⱼ is the address on the basis of which the code line has been loaded, and then
3) the securing hardware module decrypts (278) the code line loaded with the aid of the initialization vector ivⱼ calculated to obtain:
- the datum Dⱼ or its cryptogram, and
- the first error-detecting code, and then
4) the securing hardware module verifies (284), with the aid of the first error-detecting code obtained, whether there exists an error in the datum Dⱼ or its cryptogram and, if such an error exists, triggers (172) the signalling of an execution fault and, if such an error does not exist, inhibits this signalling of an execution fault.

2. Method according to Claim 1, in which:
- during step a), the method comprises:
- the updating (256) of a second error-detecting code (EDCₘ) as a function of the code line recorded at the address @ⱼ, this second error-detecting code making it possible to detect an error if any code line, contained in a block (BDₘ) of several code lines recorded in a predetermined range of addresses of the main memory, is modified after the updating of this second error-detecting code, the predetermined range of addresses comprising the address @ⱼ, and
- the recording (256) of the updated second error-detecting code,
- just before or after the operation 1), the securing hardware module verifies (260), with the aid of the second error-detecting code updated during step a), whether there exists an error in the data block containing the code line recorded at the address @ⱼ, and, if such an error exists, triggers (172) the signalling of an execution fault and, if such an error does not exist, inhibits this signalling of an execution fault.

3. Method according to Claim 2, in which during step a):
- each code line of the data block contains, in addition to a datum or to its cryptogram, a message authentication code (MACⱼ) making it possible to verify the integrity and authenticity of the datum or of the cryptogram contained in this line, and
- the second error-detecting code is updated (256) solely with the aid of the message authentication codes of the code lines contained in this data block.

4. Method according to Claim 3, in which:
- during the operation a), the second error-detecting code is updated with the aid of the following relation: EDCₘ = EDCₘXOR MAC_{jold} XOR MAC_{jnew}, where:
- the symbols EDCₘ on the right and on the left of the symbol "=" are, respectively, the preceding value and the updated value of the second error-detecting code,
- the symbol XOR is the "exclusive OR" operation, and
- the symbols MAC_{jold} and MAC_{jnew} are the values of the message authentication codes, respectively, of the old and of the new code lines recorded at the address @ⱼ.

5. Method according to any one of Claims 2 to 4, in which the updated second error-detecting code is recorded in a secure memory of the securing hardware module, this secure memory being only accessible by the securing hardware module.

6. Method according to any one of the preceding claims, in which:
- during step a), the first error-detecting code is an error-correcting code which makes it possible in addition to correct an error in the datum Dⱼ or in its cryptogram,
- during the operation 4), if an error exists, then the securing hardware module corrects (286) the datum Dⱼ or its cryptogram with the aid of the error-correcting code and then the microprocessor processes the corrected datum Dⱼ or its corrected cryptogram.

7. Method according to any one of the preceding claims, in which during step a):
- the code line contains a cryptogram CDⱼ* of a concatenation CDⱼ of the datum Dⱼ and of the first error-detecting code, this cryptogram CDⱼ* being obtained with the aid of a relation CDⱼ* = fₖₐ(CDⱼ; ivⱼ), where the function fₖₐ is a predetermined encryption function corresponding to a decryption function fₖₐ⁻¹ preprogrammed into the securing hardware module, the cryptogram CDⱼ* thus coding the datum Dⱼ and the first error-detecting code as a function of the initialization vector ivⱼ,
- during the operation 3), the decryption (278) of the code line by the securing hardware module comprises the decryption of the cryptogram CDⱼ* with the aid of the relation CDⱼ = fₖₐ⁻¹(CDⱼ*; ivⱼ) so as to obtain the decrypted datum Dⱼ and the decrypted first error-detecting code.

8. Method according to any one of the preceding claims, in which:
- during step a), the code line contains a cryptogram CDⱼ* constructed on the basis of the datum Dⱼ and the first error-detecting code makes it possible to detect an error in the cryptogram CDⱼ*, this first error-detecting code or the cryptogram CDⱼ* being encrypted function of the initialization vector ivⱼ,
- during the operation 3), the decryption of the code line by the securing hardware module comprises the decryption, with the aid of the initialization vector ivⱼ calculated, of the cryptogram CDⱼ* or of the first error-detecting code encrypted as a function of the initialization vector ivⱼ.

9. Binary code of a secure function executable by a microprocessor for the implementation of a method of execution in accordance with any one of the preceding claims, this binary code being recorded in a main memory readable by the microprocessor and corresponding to a set of several code lines, each code line corresponding to a machine word which can be transferred in a single clock cycle from the main memory into a register of the microprocessor, **characterized in that** the binary code comprises a code line containing:
- a datum Dⱼ to be processed by the microprocessor, or a cryptogram of this datum Dⱼ, and
- a first error-detecting code (ECC_{Dj}, MACⱼ, ECC_{Lj}) making it possible to detect an error in the datum Dⱼ or in its cryptogram if this datum Dⱼ or its cryptogram is modified after its recording in the main memory,
at least one of the datum Dⱼ, of its cryptogram and of the first error-detecting code being encrypted as a function of an initialization vector ivⱼ, this initialization vector ivⱼ varying as a function of the address @ⱼ at which the code line is recorded in the main memory according to a relation ivⱼ = Fᵢᵥ(@ⱼ), where the function Fᵢᵥ is a function which associates a different initialization vector ivⱼ with each different address @ⱼ of the main memory.

10. Medium for recording information readable by a microprocessor, **characterized in that** it comprises a binary code in accordance with Claim 9.

11. Microprocessor (2) for the implementation of a method in accordance with any one of Claims 1 to 8, this microprocessor comprising:
- an arithmetic and logic unit (10) able to execute the operation 1) of the method in accordance with Claim 1, and
- a securing hardware module (28),
**characterized in that** the securing hardware module (28) is configured to execute the operations 2) and 4) of the method in accordance with Claim 1.

12. Compiler (300) able to automatically transform a source code of a secure function into a binary code of this secure function, **characterized in that** the compiler is able to automatically transform the source code into a binary code in accordance with Claim 9.
